# FASCICULE DE BREVET EUROPEEN

(11) **EP 4 178 891 B1**
(45) Date de publication et mention de la délivrance du brevet: **09.09.2026**
(21) Numéro de dépôt: 20735626.2
(22) Date de dépôt: 08.07.2020
(51) Int. Cl.: B65G 54/02, G01N 35/04, B60L 5/39, B60L 50/40, B60L 13/00, B60L 9/04

(54) **VÉHICULE DE TRANSPORT D'ÉCHANTILLON BIOLOGIQUE COMPORTANT UN DISPOSITIF DE GUIDAGE**
FAHRZEUG ZUM TRANSPORT EINER BIOLOGISCHEN PROBE MIT EINER FÜHRUNGSEINRICHTUNG
VEHICLE FOR TRANSPORTING A BIOLOGICAL SAMPLE, COMPRISING A GUIDE DEVICE

(43) Date de publication de la demande: 17.05.2023
(73) Titulaire: Erba Diagnostics Limited, Dublin D02 ED70 (IE)
(72) Inventeur: VAZIRANI, Nikhil, Mumbai 400049 Maharashtra (IN); RANDRIANARIVO, Jeanet, 34380 Saint-Martin-de-Londres (FR); GHORIS, Valentin, 34070 Montpellier (FR); ANDLAUER, Sylvain, 34920 Le Cres (FR)
(74) Mandataire: Regimbeau
(86) Numéro de dépôt international: PCT/EP2020/069180
(87) Numéro de publication internationale: WO 2021/005085

(56) Documents cités:
- EP-A1- 2 629 099
- EP-A1- 2 629 099
- CN-A- 1 982 175
- DE-A1- 2 533 799
- DE-A1- 2 533 799

## Description

### DOMAINE DE L'INVENTION

L'invention concerne le transport automatisé d'objets, notamment le transport d'échantillons de fluides corporels en vue d'analyses par des automates de diagnostic médical. Des applications existent dans tous les domaines du diagnostic biologique en laboratoire ou en hôpital.

L'invention se rapporte en particulier à un véhicule de transport mobile sur un circuit, à un ensemble de transport comprenant ledit véhicule et ledit circuit, et à un ensemble d'analyse.

### ETAT DE LA TECHNIQUE

Le traitement et l'analyse d'échantillons de fluides corporels, tels que des échantillons de sang ou d'urine, est en grande partie automatisé. Une mesure physiologique est réalisée sur les échantillons. Les échantillons sont versés dans des contenants, tels que des tubes, déplacés sur une voie d'analyse afin d'être analysés.

Dans la majorité des systèmes de transport d'échantillons connus, les tubes d'échantillons sont transportés soit en vrac, soit de manière groupée dans des portoirs, par exemple des portoirs rectangulaires de dix tubes. Chaque portoir est manipulé séparément par des poussoirs, des plateaux de convoyage, etc. Dans des systèmes connus, les portoirs sont organisés en file et traités de manière séquentielle. Une fois arrivés à proximité d'un automate de diagnostic, les tubes du portoir sont manipulés individuellement par une unité de manipulation intégrée à l'automate de diagnostic, pour faire l'objet de l'analyse.

Toutefois, le transport groupé de portoirs de tubes présente plusieurs inconvénients. Si les tubes sont traités de façon séquentielle (dans leur ordre d'arrivée à l'automate de diagnostic), la présence de tubes vides ralentit la cadence d'analyse, typiquement mesurée en nombre d'échantillons analysés par heure. Cette solution impose un ordre d'analyse séquentiel et dépendant de l'ordre d'introduction des portoirs.

De plus, il existe une grande variété de tests possibles ; par exemple, un échantillon de type sérum biologique n'est pas analysé de la même manière qu'un échantillon d'urine. Les temps d'agitation, de centrifugation, etc. diffèrent. Dans le cas d'un traitement séquentiel de tubes, l'automate de diagnostic ayant la cadence d'analyse la plus basse impose son rythme aux autres automates de diagnostic. La seule manière de forcer l'analyse prioritaire d'un échantillon particulier est de procéder à une insertion manuelle dudit échantillon dans une zone d'insertion manuelle de l'automate, ce qui est peu satisfaisant.

Il a été proposé de transporter individuellement les tubes d'échantillons. Un avantage est de permettre à chaque tube d'avoir une trajectoire indépendante. Ainsi, les tubes vides ou les tubes dont le temps d'analyse est long ne ralentissent pas l'analyse des autres tubes.

Des systèmes connus comprennent un tapis roulant de convoyage, commandé électroniquement, qui transporte des supports de tube rangés en file. Les supports de tubes sont passifs ; le déplacement des tubes est entièrement géré par le tapis. Cette solution est insatisfaisante en termes de gestion de pannes ; si le tapis roulant tombe en panne, toute la boucle de transport de tubes est interrompue. De plus, il faut prévoir plusieurs tapis indépendants pour permettre une sélection entre plusieurs trajectoires divergentes.

Il existe également des véhicules de support de tube comportant des roues motorisées et un support individuel de tube sur le haut du véhicule.

Certains véhicules connus sont complètement autonomes dans leur déplacement. Une unité de contrôle est embarquée dans chaque véhicule et un programme informatique de l'unité de contrôle détermine la trajectoire du véhicule. Les roues du véhicule sont commandées par l'unité de contrôle.

Toutefois, le coût de fabrication et de maintenance de tels véhicules est très élevé, puisque le véhicule embarque toute l'intelligence nécessaire à la détermination de la trajectoire. L'usage de ce type de véhicule introduit une complexité supplémentaire pour la surveillance de la position de chaque véhicule du circuit au sein du laboratoire. De nombreux cas particuliers doivent être gérés par l'unité de contrôle de chaque véhicule, avec des risques très importants de collisions et de blocage global du circuit.

D'autres véhicules connus sont forcés à changer de direction par un changement de configuration de voies de transport « actives ». Une voie de transport active comprend des éléments mobiles commandés électroniquement, tels que des aiguillages montés au niveau d'intersections avec d'autres voies de transport.

Selon la position des dits éléments mobiles, le véhicule passant sur l'intersection adopte plusieurs trajectoires distinctes. Par exemple, le véhicule emprunte une première ou une seconde direction. Dans le cas d'un aiguillage, le véhicule est aiguillé sans modifier l'orientation des roues du véhicule.

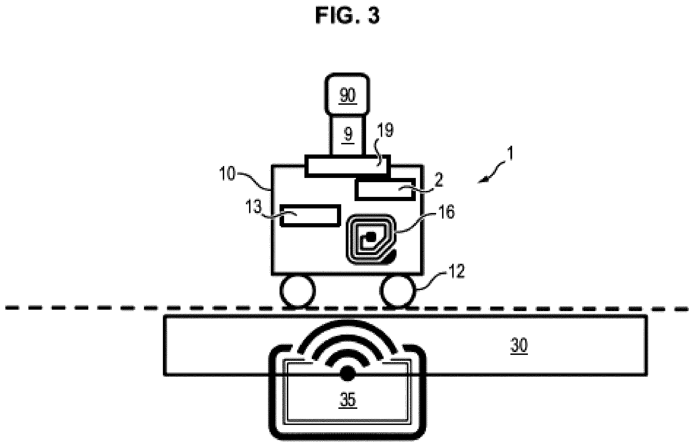

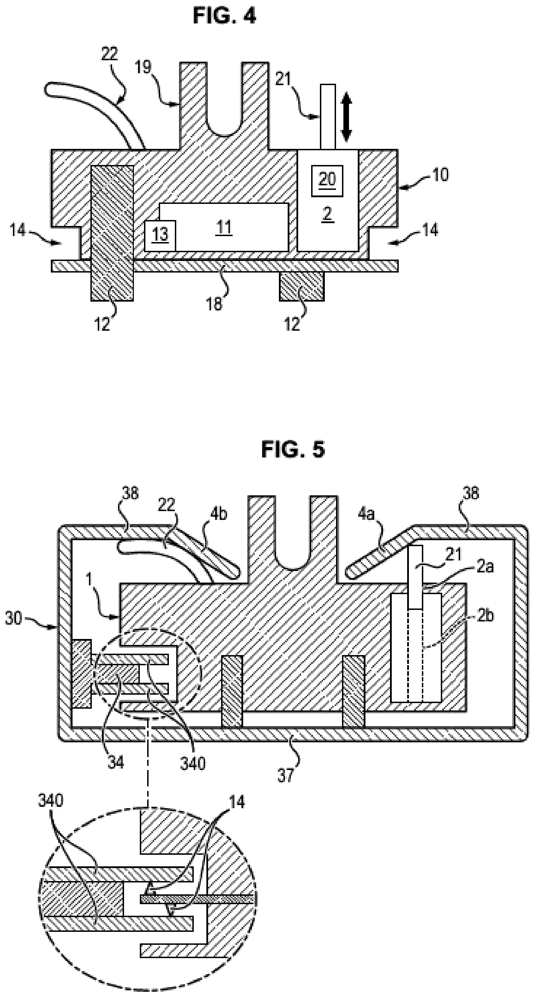

La demande de brevet US 2015/014125 A1 décrit une piste de transport comprenant un aiguillage illustré à la Figure 3 au niveau d'une intersection. La demande de brevet US 2005/271555 A1 décrit un véhicule qui ne comprend pas de moyens embarqués de changement de direction, ledit véhicule fonctionnant avec une voie de transport active dont des parois illustrées sur les Figures 3 et 4 peuvent adopter une position dépliée ou une position repliée. La configuration des parois impose la trajectoire du véhicule. CN 1 982 175 A divulgue un véhicule selon le préambule de la revendication 1.

Toutefois, les systèmes à voies de transport actives présentent plusieurs inconvénients. L'architecture de ces systèmes est complexe et il existe un risque d'endommagement si les synchronisations ne sont pas garanties, lorsque la voie change de configuration au moment du passage du véhicule. De plus, la gestion des pannes est difficile. Une panne au niveau d'une intersection de la voie de transport peut bloquer l'ensemble du circuit. Il est donc nécessaire de remplacer ou de réparer très rapidement l'équipement défaillant de l'intersection, faute de quoi les opérations d'analyse de tubes sont suspendues. Enfin, chaque changement de direction dans l'intersection entraîne une usure rapide au fil des passages de véhicules de support de tube la traversant.

### DESCRIPTION GENERALE DE L'INVENTION

Il existe un besoin pour un système de transport d'échantillons de fluides corporels dont l'usure est limitée, dans lequel une panne d'un équipement permettant le changement de direction a un impact moindre sur le fonctionnement global du circuit.

Il existe également un besoin pour un système de transport d'échantillons qui soit modulaire, d'architecture suffisamment simple pour s'adapter à de nombreux types de tests et être raccourci ou rallongé selon les besoins.

On recherche également un système de transport et d'analyse d'échantillons dans lequel la cadence d'analyse est optimisée pour l'ensemble des échantillons, malgré la présence d'une proportion importante de contenants d'échantillons vides ou malgré la présence de types d'échantillons différents.

L'invention répond à ces besoins par la fourniture, selon un premier aspect, d'un véhicule de transport d'un échantillon biologique, mobile sur un circuit, le circuit comprenant :
une voie d'entrée, une première voie de sortie et une deuxième voie de sortie,
une bifurcation permettant au véhicule circulant sur la voie d'entrée d'être redirigé sur la première voie de sortie ou sur la deuxième voie de sortie,
un premier chemin de guidage longeant la voie d'entrée, la bifurcation et la première voie de sortie,
le véhicule comprenant en outre un dispositif de guidage configurable dans :
   - une première configuration dans laquelle le dispositif de guidage coopère avec le premier chemin de guidage de sorte à diriger le véhicule vers la première voie de sortie lorsque le véhicule franchit la bifurcation,
   - une deuxième configuration dans laquelle le dispositif de guidage ne coopère pas avec le premier chemin de guidage lorsque le véhicule franchit la bifurcation, permettant au véhicule d'atteindre la deuxième voie de sortie.

Un véhicule selon l'invention comprend un dispositif de guidage adapté pour forcer le véhicule à changer de direction au niveau d'une bifurcation du circuit. Le changement de direction est réalisé par une coopération entre le dispositif de guidage présent sur le véhicule et le chemin de guidage présent sur la voie. Selon l'invention, la coopération entre le dispositif de guidage et la voie est mécanique ou magnétique comme suit:
- le premier chemin de guidage comprend un bord, dans lequel le dispositif de guidage comprend une tige et un solénoïde adapté pour déplacer la tige, la tige étant agencée pour venir en butée contre le bord lorsque le dispositif de guidage est dans la première configuration, le bord comprenant de préférence un épaulement ou un bord de cavité, de sorte à retenir le véhicule à proximité du premier chemin de guidage, ou
- le véhicule comporte une face basse et le dispositif de guidage comprend un élément de butée basse, l'élément de butée basse étant déplaçable vers une position où il fait saillie de la face basse, l'élément de butée basse étant configuré pour s'engager dans une rainure du premier chemin de guidage lorsque le dispositif de guidage est dans la première configuration, de sorte à retenir le véhicule à proximité du premier chemin de guidage, ou
- le dispositif de guidage comprend un aimant mobile entre : un premier emplacement où l'aimant coopère avec le premier chemin de guidage de sorte à attirer le véhicule vers le premier chemin de guidage, un deuxième emplacement où l'aimant ne coopère pas avec le chemin de guidage de façon suffisante pour attirer le véhicule vers le premier chemin de guidage. - le véhicule comprend un châssis et le dispositif de guidage comprend un bras monté pivotant sur le châssis, l'aimant étant fixé au bras.

Un ensemble de transport comportant un véhicule selon l'invention permet une meilleure gestion de panne qu'un ensemble de transport comportant des véhicules fonctionnant avec des voies de transport actives comprenant des éléments mobiles commandables électroniquement.

Les voies de transport du circuit ne comprennent pas nécessairement des éléments mobiles tels que des aiguillages. Il est donc plus aisé de modifier l'architecture des voies de transport au cours du temps, en fonction des besoins. Le circuit de transport ainsi obtenu présente donc une plus grande modularité que les circuits connus.

Le véhicule de transport d'échantillon de l'invention comporte optionnellement et non limitativement les caractéristiques additionnelles suivantes, prises seules ou en l'une quelconque des combinaisons techniquement possibles :
- le circuit comprend en outre un deuxième chemin de guidage qui longe la voie d'entrée, la bifurcation et la deuxième voie de sortie, le dispositif de guidage dans la deuxième configuration coopérant avec le deuxième chemin de guidage de sorte à diriger le véhicule vers la deuxième voie de sortie lorsque le véhicule franchit la bifurcation.
- le véhicule comprend en outre des roues et un moteur configuré pour entraîner en rotation les roues sélectivement vers l'avant ou vers l'arrière, le moteur étant, de préférence, un moteur à courant continu ou un moteur sans balais.
- le véhicule comprend en outre une réserve autonome d'énergie, de préférence un accumulateur ou un supercondensateur.
- le véhicule comprend un châssis et le dispositif de guidage comprend un bras monté pivotant sur le châssis, l'aimant étant fixé au bras.
- le véhicule comprend en outre un guide apte à adopter une configuration dans laquelle le guide forme liaison élastique entre le véhicule et un deuxième chemin de guidage qui longe la voie d'entrée, la bifurcation et la deuxième voie de sortie, le guide étant de préférence un ressort.
- le véhicule comprend en outre une unité de commande configurée pour commander un changement de configuration du dispositif de guidage depuis l'une des première et deuxième configurations vers l'autre configuration.
- le véhicule comprend au moins un contact électrique glissant pour alimenter le véhicule en courant électrique, le contact électrique étant agencé pour être en contact avec le circuit lorsque le véhicule circule sur le circuit.
- le véhicule comprend en outre un capteur de véhicule configuré pour détecter un autre véhicule à proximité.
- le véhicule comprend en outre une puce radiofréquence, de préférence une puce RFID, configurée pour émettre un signal comprenant un identifiant du véhicule.

L'invention vise, selon un deuxième aspect, un ensemble de transport d'échantillons comprenant un véhicule de transport d'échantillon tel que défini ci-avant, une voie d'entrée, une première voie de sortie, une deuxième voie de sortie, une bifurcation formant intersection entre la voie d'entrée, la première voie de sortie et la deuxième voie de sortie,
et un premier chemin de guidage longeant la voie d'entrée, la bifurcation et la première voie de sortie.

De façon optionnelle et non limitative, l'ensemble de transport peut présenter les caractéristiques suivantes prises seules ou en combinaison :
- le véhicule comprend des roues et la voie d'entrée et/ou la première voie de sortie comprennent une surface basse destinée à être en contact avec les roues et comprennent en outre deux murs latéraux parallèles entre eux et s'étendant depuis la surface basse, le premier chemin de guidage étant agencé le long de l'un desdits murs latéraux, le premier chemin de guidage comprenant de préférence un épaulement ou un bord de cavité contre lequel le dispositif de guidage du véhicule est apte à venir en butée.
- les murs latéraux comprennent chacun un épaulement et les épaulements sont mobiles entre une position de maintien du véhicule et une position de libération du véhicule dans laquelle lesdits épaulements sont configurés pour ne pas maintenir en position le véhicule lorsqu'il est situé entre les épaulements, de sorte à autoriser un retrait du véhicule du circuit.
- le circuit comprend la première voie de sortie, la deuxième voie de sortie et une troisième voie de sortie, la troisième voie de sortie s'étendant entre la première voie de sortie et la deuxième voie de sortie, la bifurcation formant intersection entre la voie d'entrée et les première, deuxième et troisième voies de sortie.
- le circuit comprend une piste d'alimentation agencée pour coopérer avec le contact électrique du véhicule.
- le circuit comprend au moins un détecteur de passage de véhicule, le détecteur de passage étant de préférence configuré pour recevoir un identifiant de véhicule, le détecteur de passage étant de préférence un émetteur/récepteur radiofréquence configuré pour activer une puce radiofréquence du véhicule.

Selon un troisième aspect, l'invention concerne un ensemble d'analyse d'échantillons, notamment des échantillons de fluides corporels, l'ensemble comprenant un ensemble de transport d'échantillons tel que défini ci-avant, ainsi qu'une unité d'analyse d'échantillons, agencée pour qu'un contenant d'échantillon placé sur le véhicule de l'ensemble de transport ait accès à une zone d'analyse de l'unité d'analyse, et une unité de contrôle configurée pour émettre un signal de changement de direction reçu par le véhicule de l'ensemble de transport.

De façon optionnelle et non limitative, dans un tel ensemble d'analyse d'échantillons, l'unité d'analyse d'échantillons peut être située à proximité du premier chemin de guidage, de sorte que le véhicule, lors d'un franchissement de la bifurcation, soit dirigé vers l'unité d'analyse d'échantillons si le dispositif de guidage se trouve dans la première configuration.

### DESCRIPTION GENERALE DES FIGURES

D'autres caractéristiques, buts et avantages de l'invention ressortiront de la description ci-après, qui est purement illustrative et non limitative, et qui doit être lue en regard des dessins annexés parmi lesquels :
La figure 1 est une vue schématique d'un ensemble d'analyse de tubes comportant un circuit de transport associé à plusieurs systèmes ;
La figure 2 est un schéma fonctionnel de l'ensemble d'analyse de la Figure 1 ;
La figure 3 représente un véhicule de support de tube selon un premier mode de réalisation, vu du côté arrière ;
La figure 4 représente un véhicule de support de tube selon un premier mode de réalisation ;
La figure 5 représente le véhicule de la Figure 4 vu depuis l'arrière, en cours de déplacement sur une voie de transport. La partie basse de cette Figure 5 est une vue schématique rapprochée d'une piste d'alimentation électrique de la voie de transport ;
Les figures 6a, 6b, 6c sont des vues schématiques en perspective de voies de transport comportant une portion inférieure similaire à la voie de transport de la Figure 5 et une portion supérieure respectivement selon une première variante, une deuxième variante et une troisième variante ;
Les figures 7a, 7b représentent schématiquement un véhicule de support de tube selon un deuxième mode de réalisation ;
La figure 8 est une vue schématique de dessus d'un circuit comportant le véhicule et la voie de transport de la Figure 5, sur laquelle on a relevé plusieurs positions successives du véhicule de la Figure 3 ;
Les figures 9a, 9b, 9c représentent un véhicule de support de tube selon un troisième mode de réalisation vu depuis l'arrière, le véhicule étant situé au niveau d'une bifurcation d'une voie de transport, le dispositif de guidage étant respectivement dans une première, une deuxième et une troisième configuration sur ces trois figures ;
La figure 10 est une vue schématique de dessus d'un circuit comportant le véhicule et la voie de transport des Figures 9a, 9b et 9c ;
La figure 11 est une vue schématique de dessus d'un véhicule de support de tube selon un quatrième mode de réalisation ;
La figure 12 est une vue schématique de dessus d'un ensemble d'analyse d'échantillons qui inclut le véhicule de la Figure 11, représenté ici dans plusieurs positions successives, et qui inclut un circuit de transport selon une variante.

### DESCRIPTION DETAILLEE DE MODES DE REALISATION DE L'INVENTION

La description détaillée ci-après présente des systèmes pour le transport automatisé d'échantillons biologiques. Par « échantillon biologique » on entend un volume liquide ou solide (par exemple un fluide corporel, comme du sang) sur lequel l'automate de diagnostic est configuré pour réaliser un ou plusieurs tests. On entend par « contenant d'échantillons » un récipient qui permet le transport individualisé d'un échantillon prélevé sur un individu.

Dans toute la description ci-après, les contenants d'échantillons sont des tubes à essai. Il est avantageux d'utiliser comme contenant un tube comportant un bouchon amovible, pour éviter de perdre ou d'altérer l'échantillon pendant son transport. L'invention trouve toutefois une utilisation avantageuse pour tout autre type de contenant d'échantillon pouvant être transporté sur un véhicule.

Dans toute la suite et sur les figures annexées, des éléments similaires sont désignés avec les mêmes références alphanumériques.

### Ensemble d'analyse d'échantillons biologiques

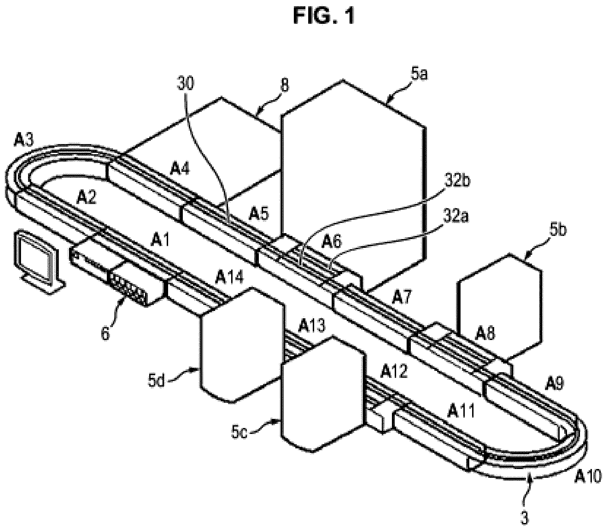

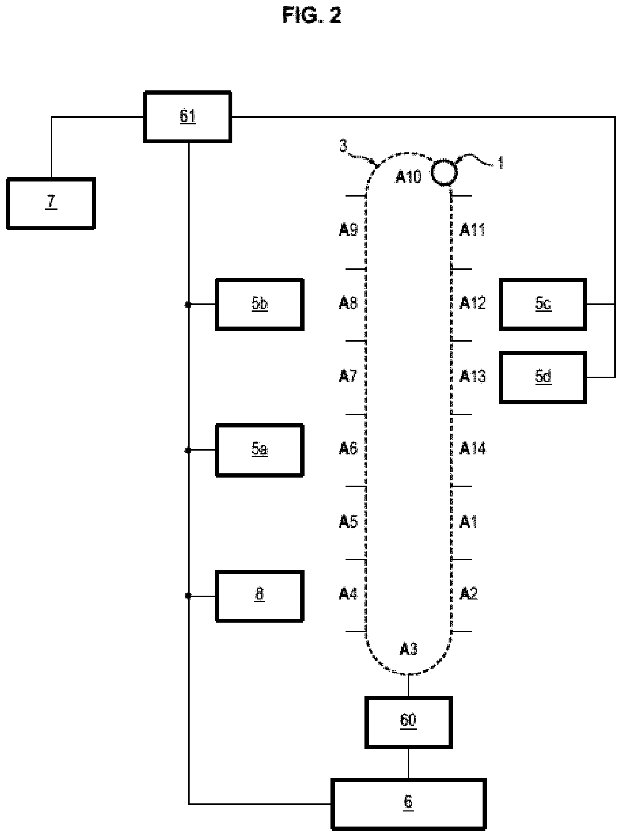

Les **Figures 1** **et** **2** représentent schématiquement un ensemble d'analyse d'échantillons biologiques, pouvant être par exemple installé dans un laboratoire d'analyse médicale. Cet ensemble comporte un circuit 3 de transport de tubes d'échantillons et une pluralité de systèmes électroniques, de préférence des systèmes appartenant au domaine de l'instrumentation de laboratoire, positionnés sur les bords du circuit 3.

Le circuit 3 est composé d'une pluralité de modules numérotés A1 à A14 et placés en série. Chaque module comporte une surface basse pour contact avec un support, une surface haute sur laquelle peuvent circuler des véhicules de support de tube 1 tels que l'un quelconque des véhicules décrits ci-après, et des faces latérales. Les modules A3 et A9 sont des modules réalisant un tour à 180°. Les autres modules correspondent à un tronçon droit.

Sur la Figure 1, on a représenté pour chaque module une voie de transport s'étendant d'une extrémité à l'autre du module. Dans cet exemple, chaque voie de transport prend la forme d'un canal pratiqué dans la surface haute du module. Un véhicule 1 peut circuler dans le canal. Pour simplifier, sur la Figure 2, les voies de transport consécutives sont représentées sous forme d'une unique courbe pointillée fermée.

Parmi les modules à tronçon droit, certains modules (dans cet exemple, les modules situés à proximité d'un système d'analyse parmi les systèmes 5a à 5d) comprennent deux voies parallèles. On a par exemple référencé sur la Figure 1 une voie d'entrée 30 s'étendant d'une extrémité à l'autre du module A5 et deux voies de sortie 32a et 32b parallèles qui s'étendent le long du module A6. La voie d'entrée est jointe aux deux voies de sortie via une bifurcation (non représentée sur la Figure 1) à l'interface des modules A5 et A6. La voie d'entrée et les voies de sortie sont des voies de transport.

Les voies de transport étant dans le prolongement les unes des autres, un véhicule de support de tube positionné sur le circuit 3 peut atteindre l'un quelconque des modules A1 à A14, en fonction de sa course sur les voies de transport.

Le circuit 3 dessert donc tous les systèmes de l'ensemble d'analyse.

Un avantage du circuit 3 est sa modularité ; il est aisé de déplacer les modules du circuit et de les replacer dans une nouvelle configuration, par exemple si les emplacements des systèmes desservis par le circuit 3 sont modifiés. Un module à tronçon droit peut être facilement remplacé par un module réalisant un tournant, et inversement. Il suffit de placer les voies de transport dans le prolongement les unes des autres.

L'ensemble d'analyse d'échantillons des Figures 1 et 2 est ainsi évolutif. De façon optionnelle, lors de la mise en fonction d'un circuit présentant un nouvel ordonnancement des modules, l'unité de contrôle 6 réalise un scan du circuit et enregistre une configuration spatiale des modules du circuit. Dans le présent exemple, l'unité de contrôle 6 est branchée au module A3 ; lors de la mise sous tension du système, le module A3 s'allume en premier, puis les autres modules sont mis sous tension en cascade les uns après les autres. Lors de la mise sous tension, chaque module transmet un signal reçu par l'unité de contrôle 6. En fonction des instants de réception desdits signaux, on remonte à la configuration spatiale.

Parmi les systèmes positionnés aux bords du circuit 3, on compte des instruments d'analyse 5a, 5c, 5c, 5d. A titre d'exemple, l'instrument d'analyse 5a est un automate de diagnostic comportant une unité de manipulation d'échantillon individuel et comportant des moyens optiques et/ou chimiques et/ou tous autres moyens d'analyse. L'unité de manipulation d'échantillon a notamment pour fonctions de réaliser la manutention d'un tube vers une position d'échantillonnage de l'automate de diagnostic.

De façon avantageuse, l'automate de diagnostic 5a ne comporte pas d'unité de transport d'échantillons dédiée ou « auto-sampler » selon la terminologie anglosaxonne. En effet, le circuit 3 suffit à remplir la fonction de transport d'échantillons jusqu'à une position où les échantillons peuvent être analysés par l'automate 5a.

Les instruments d'analyse peuvent présenter des cadences maximales d'analyse différentes, sans affecter la cadence totale pour l'analyse d'un échantillon positionné dans le circuit, comme il sera vu ci-après.

L'ensemble d'analyse comporte en outre une unité de contrôle 6, par exemple un serveur informatique jouant le rôle d'ordonnanceur ou de « dispatcher » selon la terminologie anglosaxonne. L'unité 6 peut être un système de type LAS pour « Laboratory Automation System » dédié de manière exclusive à la gestion des déplacements d'échantillons et à l'automatisation du laboratoire. L'unité de contrôle 6 comprend en mémoire un programme informatique pour l'émission de signaux de changement de direction, destinés à des véhicules de support de tube circulant sur les voies de transport du circuit 3. De préférence, l'unité de contrôle 6 comporte une interface de communication pour permettre la saisie d'instructions de commande par un opérateur et/ou une interface graphique pour permettre la visualisation d'informations sur l'état des systèmes.

Dans le présent exemple, l'unité de contrôle 6 est également configuré pour émettre des signaux de contrôle de vitesse aux véhicules circulant sur le circuit 3. Ainsi, l'unité de contrôle 6 gère la synchronisation entre les différents véhicules du circuit. Un avantage est de renforcer la sécurité des opérations, en détectant éventuellement des risques de choc.

Dans un mode préférentiel, l'unité de contrôle transmet aux véhicules les signaux de contrôle de vitesse ou toute autre commande électronique utile par une voie de communication sans fil, par exemple via un réseau radiofréquence tel qu'un réseau Bluetooth, RFID ou Wi-Fi. Un avantage de la communication sans fil est de ne pas risquer d'éventuelles interférences entre des signaux de contrôle des véhicules et des courants électriques d'alimentation des véhicules.

En variante, l'unité de contrôle 6 est connectée à des pistes électriques du circuit 3 via un module PLC 60, pour « Power Line Carrier » ou courant porteur en ligne, et l'unité de contrôle 6 transmet des signaux de changement de direction, des signaux de contrôle de vitesse, ou toute autre commande électronique utile, aux véhicules présents sur le circuit 3 par PLC via les pistes électriques du circuit.

Un avantage de cette dernière variante est de permettre la mutualisation des voies de communication par PLC et des pistes d'alimentation électrique des véhicules agencées dans les voies de transport.

On notera que dans la variante où le PLC est utilisé pour transmettre les signaux de commande des véhicules, les pistes d'alimentation et les voies de communication avec les véhicules peuvent être mutualisées ou non. Dans le cas où les pistes d'alimentation sont séparées des voies de communication dans les voies de transport, un véhicule de support de tube peut comprendre un premier contact glissant dédié à l'alimentation et un deuxième contact glissant pour la réception des commandes.

Dans l'exemple de la Figure 1, tous les modules comportent une piste électrique dans le canal de circulation du véhicule. Les pistes électriques sont placées bout à bout.

L'unité de contrôle 6 est configurée, de façon optionnelle, pour reconnaître automatiquement l'ordonnancement des modules du circuit par communication avec lesdits modules. Chaque module peut être identifié par une adresse unique.

De façon avantageuse, l'ensemble d'analyse comprend une baie 8 d'entrée et de sortie de tubes d'échantillons. La baie 8 comprend un espace de stockage de tubes et un dispositif (non représenté) pour le déplacement sélectif de tubes entre l'espace de stockage et la voie de transport correspondant au module A4. On contrôle ainsi l'ordre d'entrée/sortie des tubes sur le circuit 3. La baie 8 peut être remplacée par un bac de chargement en vrac.

Les systèmes 5a à 5d, 6 et 8 sont ici connectés à une interface 61 de communication électronique entre l'unité de contrôle 6 et un LIS 7 pour « Laboratory Information System » selon la terminologie anglosaxonne courante. L'interface 61 permet une communication bidirectionnelle. Il s'agit de préférence d'un concentrateur réseau ; l'interface 61 est ici un commutateur réseau Ethernet.

Le système LIS 7 comprend des bases de données dans lesquelles sont encodées des données de patients, des résultats de tests physiologiques, des instructions de programme de test, ou toute autre information utile à la gestion du laboratoire. De préférence, les systèmes 5a à 5d sont configurés pour communiquer avec le LIS 7 en vue de l'enregistrement des résultats d'analyse des échantillons.

Les systèmes 5a à 5d peuvent également être configurés pour transmettre au LIS 7 une confirmation de traitement d'un échantillon. Le LIS 7 peut ensuite communiquer ladite confirmation à l'unité de contrôle 6. Il est ainsi tenu compte de l'état d'avancement des analyses pour l'ordonnancement des flux de transport de tubes.

De manière générale, des séquences d'analyse d'échantillons sont déterminées au niveau du LIS 7, qui communique les informations d'ordonnancement des flux de transport de tubes à l'unité de contrôle 6.

### Véhicule de support de tube comportant un dispositif de guidage

La Figure 3 représente schématiquement un véhicule 1 circulant le long de la voie d'entrée 30 du circuit 3.

Le véhicule 1 est un véhicule de support de tube. Il comprend un support, solidaire du véhicule, dans lequel un tube peut être positionné. Le tube peut ainsi être déplacé par le véhicule sans risquer une chute ou un endommagement du tube ou de son contenu. Ici, le véhicule 1 comprend un support 19 qui comprend un orifice pour l'insertion d'un tube 9. Le tube 9 de la Figure 3 comporte un bouchon 90. On comprendra que si l'on utilise un contenant d'échantillon différent d'un tube, le support 19 est conformé différemment de sorte à assurer la retenue du contenant lors du déplacement du véhicule.

Conformément à l'invention, le véhicule 1 comprend un dispositif 2 de guidage. Le dispositif 2 est configurable dans une première configuration où il coopère avec un chemin de guidage (non représenté sur la Figure 3) solidaire du circuit 3, de sorte à diriger le véhicule vers une voie de sortie lorsque le véhicule franchit une bifurcation (non représentée), c'est-à-dire par une zone du circuit 3 reliant une voie d'entrée à une pluralité de voies de sortie que peut emprunter le véhicule 1.

Le dispositif 2 de guidage est, en outre, configurable dans une deuxième configuration dans laquelle il ne coopère pas avec le chemin de guidage, ce qui permet au véhicule d'atteindre une autre voie de sortie après avoir franchi la bifurcation.

Par « chemin de guidage » on entend un élément longeant une voie de transport, apte à coopérer avec le véhicule pour accompagner le véhicule dans une direction. La coopération du dispositif 2 avec un chemin de guidage produit un effort mécanique suffisamment important sur le reste du véhicule pour influencer la direction du véhicule. De préférence, le chemin de guidage est fixe et présente une seule configuration ; c'est le changement de configuration du dispositif de guidage qui contrôle la direction.

Un chemin de guidage prend par exemple la forme d'un rail qui court le long de la voie de transport.

Par l'intermédiaire du dispositif de guidage 2, on peut donc contrôler sélectivement la direction du véhicule 1 lorsque le véhicule 1 passe par une bifurcation.

Des exemples de fonctionnement du dispositif de guidage 2 seront donnés ci-après en relation à plusieurs exemples de réalisation du véhicule 1 et du circuit 3.

Le véhicule 1 comprend des moyens de locomotion sur les voies de transport du circuit 3. De préférence, le véhicule peut se déplacer dans les deux sens. Le véhicule 1 comporte ici un châssis 10. Le châssis est ici de forme globalement cylindrique, la longueur du cylindre étant faible comparativement à l'aire des surfaces inférieure et supérieure. Les surfaces inférieure et supérieure du châssis présentent par exemple un diamètre compris entre 10 et 50 millimètres, par exemple 30 millimètres. Ainsi, le châssis 10 a une forme de palet. En alternative, le châssis pourrait avoir une autre forme, par exemple une forme parallélépipédique avec une longueur de préférence de 35 millimètres et une largeur de préférence de 25 millimètres.

Le véhicule comprend également des roues 12 fixées à une face inférieure du châssis 10, propres à créer un entraînement avec la voie de transport 30. Le véhicule comprend typiquement deux roues 12 motrices.

Le véhicule 1 comprend en outre une unité de commande 13. L'unité de commande 13 communique électroniquement avec le dispositif de guidage 2. L'unité de commande 13 peut transmettre des signaux de changement de direction au dispositif de guidage 2 pour entraîner un changement de configuration du dispositif de guidage 2 entre les première et deuxième configurations.

Dans une variante avantageuse, l'unité de commande 13 est apte à communiquer avec l'unité de contrôle 6 de l'ensemble d'analyse, par exemple par une communication sans fil et/ou via des pistes électriques présentes sur la voie de transport. L'unité de commande 13 peut alors recevoir des informations de l'unité de contrôle 6 pour commander les changements de direction.

Dans cette variante, les changements de direction sont avantageusement gérés de manière globale par l'unité de contrôle 6. Il est ainsi possible de synchroniser les mouvements de l'ensemble des véhicules circulant sur le circuit, de manière centralisée. De plus, il n'est pas nécessaire d'équiper le véhicule d'une unité de contrôle programmée pour déterminer de façon autonome les changements de direction sur le circuit. Le véhicule est donc moins onéreux à produire qu'un véhicule autonome de support de tube de l'art antérieur.

De façon avantageuse, le véhicule 1 comprend également une puce radiofréquence 16. La puce 16 est, de préférence, une puce RFID apte à coopérer avec un lecteur RFID de la voie de transport.

Dans un mode de réalisation avantageux, chaque module de la voie de transport comprend un ou plusieurs lecteurs radiofréquence. Chaque lecteur est configuré pour réaliser une détection de présence d'un véhicule. La présence d'un véhicule est typiquement détectée au moment où le véhicule passe à l'aplomb du lecteur. De façon préférentielle, chaque lecteur permet également l'identification d'un véhicule lors de la détermination de son passage. Dans cette variante, la puce 16 est configurée pour émettre, après avoir été interrogée par un lecteur radiofréquence, un signal comprenant un identifiant du véhicule. L'identifiant du véhicule a été préalablement enregistré dans une mémoire de la puce 16. Ainsi, un lecteur radiofréquence 35 peut activer la puce 16 et lui transmettre une requête d'identifiant lorsque le véhicule 1 passe à proximité du lecteur 35.

Le lecteur 35 est par exemple situé dans la voie de transport et peut communiquer électroniquement avec l'unité 6. Selon d'autres variantes, la puce 16 peut être complétée ou remplacée par des moyens de communication avec la voie de transport. La puce 16 est par exemple remplacée par un moyen optique tel qu'un code à barres ou par un QR Code, et le lecteur 35 est configuré pour mettre en œuvre une reconnaissance optique du code sur le véhicule. En variante, les moyens de communication avec la voie de transport sont mécaniques, magnétiques, ou tout autre moyen de communication usuel.

Les lecteurs radiofréquence associés aux moyens d'identification de véhicule forment une boucle de retour d'information, pour le suivi et la gestion complète et sécurisée des flux de transport de tubes par le LIS 7. L'unité de contrôle 6 peut ainsi synchroniser en temps réel les déplacements des véhicules et minimiser les risques de blocages ou de collisions entre véhicules.

**Un** avantage est de permettre la transmission en temps réel d'informations spatiales et temporelles sur la circulation des véhicules de support de tube sur le circuit 3.

Grâce au dispositif de guidage 2, le véhicule 1 constitue un moyen simple et partiellement autonome de transport de tube. Sur un circuit doté de plusieurs véhicules semblables au véhicule 1, un contrôle de direction peut être mis en œuvre au niveau de chaque véhicule. Ainsi, il est possible d'utiliser des voies de transport « passives », c'est-à-dire n'intégrant pas des éléments mobiles qui réalisent le changement de direction des véhicules. Notamment, les bifurcations du circuit de transport n'ont pas besoin d'incorporer des éléments mobiles.

Un avantage additionnel du véhicule comprenant le dispositif de guidage 2 est que plusieurs véhicules peuvent franchir la même intersection et prendre des chemins différents, les uns indépendamment des autres. Ce n'est pas le cas pour un aiguillage d'une voie de transport « active » de l'art antérieur, qui ne peut réaliser qu'un changement de direction de véhicule à la fois, et qui nécessite de surcroît la conservation d'un espace suffisant entre chaque véhicule pour éviter les mauvaises orientations.

Dans la mesure où c'est le véhicule qui supporte les efforts pour le changement de direction, l'usure est subie principalement par le véhicule et par son dispositif de guidage au cours du temps. La voie de transport, elle, est « passive » et ne comprend pas nécessairement d'élément mobile. Or, sur un circuit de transport d'échantillons d'un laboratoire d'analyse, les transporteurs de tube sont en général plus nombreux que les bifurcations ; ainsi, un dispositif de guidage d'un véhicule s'use moins vite qu'un aiguillage qui serait situé sur une bifurcation dans le cas d'une voie de transport « active ».

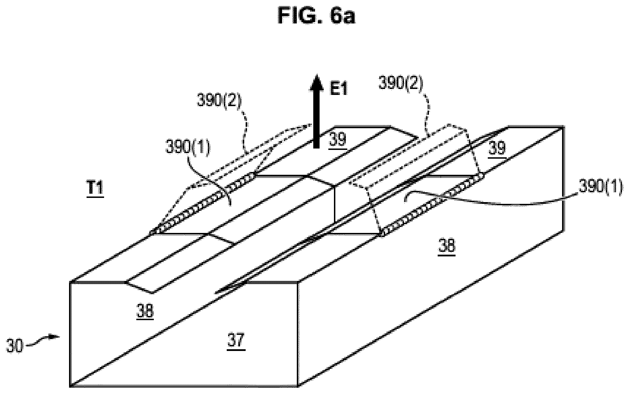

De plus, en cas de défaillance ou de panne d'un dispositif de guidage de véhicule, la capacité des autres véhicules du circuit à réaliser les changements de direction n'est pas affectée. De façon optionnelle, la voie de transport comprend un aiguillage utilisé uniquement en cas de panne d'un véhicule, mobile vers une configuration de sortie. Lorsque l'aiguillage est dans la configuration de sortie, un véhicule défaillant peut être poussé vers ledit aiguillage par un véhicule de support de tube fonctionnel, ce qui permet au véhicule défaillant d'être écarté du circuit de transport pour maintenance ou remplacement. D'autres solutions d'évacuation d'un véhicule de support de tube tombé en panne sont décrites ci-après en relation aux Figures 6a à 6c. Dans le cas d'une voie de transport active de l'art antérieur, la panne d'un élément mobile de la voie empêche tous les véhicules passant par ladite voie à changer de direction ce qui entraîne souvent une panne globale du système, sauf si ce système possède des voies complémentaires de contournement qui complexifient encore l'automatisation et les coûts matériels.

Un avantage supplémentaire du véhicule comportant un dispositif de guidage pour le changement de direction est la prédictibilité de l'usure du véhicule. En effet, le taux d'utilisation du véhicule de support de tube est connu en temps réel, puisque ce taux d'utilisation dépend directement du nombre d'échantillons mis en circulation sur le circuit.

### Véhicule à dispositif de guidage mécanique sur une face haute

On a représenté en Figure 4 un premier exemple de véhicule de support de tube conforme à la Figure 3. Le véhicule comprend ou ne comprend pas une puce radiofréquence. Le véhicule peut circuler sur la voie de transport 30.

Sur la Figure 4, le véhicule est vu depuis un côté arrière.

Le véhicule comprend un châssis 10 ayant une forme globale de palet. En alternative, la forme du châssis peut être parallélépipédique. Dans cet exemple, le châssis 10 est moulé en matériau plastique. Un support de tube 19 est positionné sur une surface supérieure du châssis, la surface supérieure étant opposée à une surface inférieure du châssis, cette dernière surface étant destinée à faire face à une surface supérieure d'une voie de transport sur laquelle roule le véhicule.

Le support de tube comprend ici un socle faisant saillie de la surface supérieure du châssis, dans lequel est pratiqué un orifice en forme de U destiné à recevoir une partie inférieure d'un tube 9, le tube 9 étant alors stabilisé dans le socle.

De plus, un dispositif de guidage 2 de type mécanique, apte à coopérer avec un chemin de guidage d'une voie de transport, est agencé dans le châssis.

Le dispositif de guidage 2 comprend ici une tige 21 et un actionneur 20 adapté pour déplacer la tige 21. L'actionneur 20 est ici de type solénoïde. L'actionneur est commandé électroniquement et est en communication électronique avec l'unité de traitement 13.

La tige 21 présente une position déployée et une position escamotée. La position déployée de la tige correspond à la première configuration du véhicule. La position escamotée de la tige correspond à la deuxième configuration du véhicule. L'actionneur 20 est configuré pour faire basculer sélectivement la tige 21 de l'une quelconque à l'autre de ces deux positions.

On a représenté en Figure 5 le véhicule de la Figure 4 positionné sur une voie de transport, ici la voie d'entrée 30, toujours vu du côté arrière. La première voie de sortie 32a et la deuxième voie de sortie 32b peuvent être de conception semblable à celle de la voie d'entrée 30 ici illustrée. Sur la Figure 5, on a illustré la position déployée et la position escamotée de la tige 21 du dispositif de guidage 2.

La voie de transport comprend un support, par exemple formé en métal. Le support comprend une face 37, en contact avec les roues 12, sur laquelle roule le véhicule. La face 37 de la voie de transport est en contact avec le sol ou avec un socle sur lequel la voie de transport est positionnée. Le support comprend en outre deux parois latérales 38 sensiblement parallèles, entre lesquelles roule le véhicule. Les parois latérales 38 s'étendent sensiblement perpendiculairement à la face 37 du support, à la verticale depuis la face 37. Chacune des parois latérales 38 se prolonge en une partie médiale 39 qui s'étend parallèlement à la face 37. Au moins une paroi latérale (dans le présent exemple, chacune des parois latérales) comprend un bord configuré pour retenir latéralement le véhicule lorsque le dispositif de guidage du véhicule coopère avec ledit bord.

Dans le présent exemple, les bords coopérant avec le dispositif de guidage comprennent des épaulements 4a et 4b. Les parties médiales 39 de la voie de transport se prolongent en des parties terminales qui comprennent les épaulements 4a et 4b. Les épaulements jouent ainsi le rôle de chemins de guidage pour le véhicule de support de tube. Le fonctionnement du dispositif de guidage dans ce premier exemple est décrit ci-après.

De façon préférée, chaque partie terminale est également configurée pour empêcher un basculement en avant ou en arrière du véhicule selon une direction parallèle à une direction d'avancement du véhicule. Un avantage de cette configuration du support de la voie de transport est de stabiliser le véhicule à la fois dans son déplacement latéral (entre la gauche et la droite selon l'orientation de la Figure 5) et dans son inclinaison avant/arrière. On améliore ainsi la stabilité de l'échantillon inséré dans le support d'échantillon. Cela est particulièrement pertinent dans le cas où le tube inséré dans le support n'est pas bouché.

Dans le présent exemple, les épaulements 4a et 4b se prolongent en direction d'un côté supérieur du châssis 10 et forment un angle obtus avec les parties médiales 39 horizontales. Les épaulements 4a et 4b sont ainsi orientés vers l'intérieur du véhicule et limitent un basculement avant/arrière du véhicule.

L'épaulement de droite 4a forme un premier chemin de guidage 4a pour le véhicule, et l'épaulement de gauche 4b forme un deuxième chemin de guidage pour le véhicule. Les deux épaulements 4a et 4b sont sensiblement symétriques par rapport à un axe central de la voie 30. Un espace libre est ménagé entre les pointes des deux épaulements 4a et 4b, de sorte à laisser dépasser le tube 9 hors du support 19 lors du passage du véhicule dans la voie de transport.

Ainsi, le véhicule de support de tube roule le long de la voie 30 sans être gêné dans sa course par les deux épaulements, même quand un tube est agencé dans le support 19.

On notera que, pour le fonctionnement du dispositif de guidage 2, l'épaulement de gauche 4b n'est pas nécessaire.

La tige 21 en position déployée 2a fait saillie de la surface supérieure du châssis du véhicule, de sorte à pointer vers une surface interne de l'épaulement 4a. Si le véhicule rencontre une bifurcation et commence à se diriger vers la gauche, la tige 21 vient en butée contre l'épaulement 4a. La tige 21 est dans un matériau suffisamment résistant (par exemple du métal) pour résister à l'effort de traction du véhicule partant vers la gauche. Par effort de réaction, le véhicule est retenu à proximité de l'épaulement 4a et ne tourne pas vers la gauche. La tige 21 a une longueur suffisante pour venir en butée contre l'épaulement 4a lorsque la tige est en position déployée, ici une longueur comprise entre 1 et 10 millimètres.

La tige 21 en position escamotée 2b est rétractée à l'intérieur du châssis. Ainsi, lorsque le dispositif de guidage 2 est dans la deuxième configuration et que la tige est escamotée, le véhicule n'est pas bloqué dans sa course par l'épaulement 4a si celui-ci commence à se diriger vers la gauche.

L'actionneur 20 agit donc sur la course de la tige 21 pour déplacer la tige entre la position déployée, dans laquelle la tige coopère avec l'épaulement formant chemin de guidage, et la position escamotée, dans laquelle la tige ne coopère pas avec l'épaulement formant chemin de guidage.

Le châssis 10 du véhicule contient en outre une unité de traitement 13 et un moteur 11. Le moteur assure la motorisation de deux roues 12 du véhicule s'étendant au-delà d'une surface inférieure 18 du châssis. De façon avantageuse, pour accroître l'efficacité de transport des tubes et la cadence d'analyse, le moteur 11 est un moteur à haut rendement. Il s'agit par exemple d'un moteur à courant continu ou d'un moteur sans balais ou « brushless » selon la terminologie anglosaxonne. Le moteur 11 est apte à transformer l'énergie électrique, avec laquelle le véhicule est alimenté, en énergie mécanique pour faire tourner les roues 12 vers l'avant ou vers l'arrière. Les roues peuvent être remplacées par tous moyens de locomotion du véhicule le long d'une voie de transport. De préférence, le moteur est directement alimenté en énergie électrique par les contacts électriques glissants du véhicule lorsque ces contacts coopèrent avec des pistes d'alimentation de la voie de transport.

L'unité de traitement 13 est configurée pour recevoir des signaux de commande de déplacement et de convertir lesdits signaux en des signaux de contrôle du moteur 12. De manière préférée, l'unité de traitement 13 est également configurée pour contrôler une vitesse de déplacement du véhicule en fonction d'une information de vitesse encodée dans les signaux de commande de déplacement.

Une vitesse moyenne du véhicule au cours de son déplacement le long du circuit est de préférence comprise entre 0,1 et 1 mètre par seconde, et s'élève typiquement à 0,4 mètre par seconde.

De préférence, le moteur 11 est apte à entraîner les roues 12 soit dans une direction vers l'avant, soit dans une direction vers l'arrière. De préférence, une vitesse du moteur peut être contrôlée par l'unité de traitement 13.

On notera que les roues 12 ne sont pas nécessairement configurées pour changer d'orientation, puisque le dispositif de guidage 2 permet des changements de direction du véhicule sans nécessité de pivoter les roues.

De façon avantageuse, l'unité de traitement 13 est ici configurée également pour commander le changement de configuration du dispositif de guidage 2 depuis l'une des première et deuxième configurations vers l'autre configuration. S'il existe plus de deux configurations du dispositif de guidage du véhicule - notamment dans le cas où le véhicule peut atteindre trois chemins de guidage différents, ou plus, lors du franchissement d'une bifurcation du circuit - l'unité de traitement 13 est de préférence configurée pour commander tous les changements de configuration correspondants.

L'unité de traitement 13 peut par exemple recevoir les commandes de changement de direction depuis l'unité de contrôle 6 associée au circuit 3, soit sans fil, soit via des pistes électriques de la voie de transport.

De façon préférée, le véhicule 1 comprend, sur une surface du châssis, un contact électrique 14. Le contact 14 est configuré pour coopérer avec une piste d'alimentation électrique d'une voie de transport, pour alimenter le véhicule pendant que ce dernier se trouve sur la voie de transport.

Dans une variante préférée qui est celle représentée sur les Figures 4 et 5, le véhicule comprend deux contacts électriques 14 distincts positionnés sur les deux surfaces latérales opposées du véhicule, et les contacts 14 sont aptes à coopérer avec des pistes d'alimentation électriques s'étendant le long des parois latérales de la voie de transport. Les contacts 14 sont des contacts électriques glissants.

On a représenté, sur la vue rapprochée du bas de la Figure 5, l'interface entre le contact électrique 14 situé sur la face gauche du véhicule et la piste d'alimentation électrique 34 en forme de rail de glissement, qui s'étend le long de la paroi latérale gauche.

La piste d'alimentation électrique 34 comprend deux électrodes 340 de polarités opposées entre lesquelles peut circuler un courant électrique. Les contacts électriques 14 sont ici placés sur un circuit imprimé (ou PCB pour « Printed Circuit Board ») du véhicule. Ce sont des contacts électriques glissants, agencés pour venir en contact avec les électrodes 340 au cours du déplacement du véhicule dans la voie 30 de transport.

Le véhicule est apte à recevoir des signaux de changement de direction et/ou des signaux de changements de vitesse depuis l'unité de contrôle 6 via un réseau sans fil tel qu'un réseau Wi-Fi. Dans une variante possible, la piste d'alimentation 34 est du type PLC, pour « Power Line Carrier ». La piste 34 est alors également apte à transférer des données électroniques à l'unité de traitement du véhicule, par exemple des signaux de changement de direction.

On notera que le véhicule peut comprendre, en alternative ou en combinaison d'une interface Wi-Fi, une interface apte à recevoir des signaux par communication Bluetooth.

Optionnellement, le véhicule peut comprendre une réserve autonome d'énergie, en remplacement ou en combinaison des contacts électriques 14. Le véhicule est alors autonome pour ce qui concerne son alimentation électrique. Cela est notamment utile si le véhicule est amené à franchir des zones sans contact avec des pistes d'alimentation électrique. La réserve autonome d'énergie est par exemple un accumulateur ou un supercondensateur. On comprendra que les véhicules selon les exemples alternatifs présentés ci-après peuvent aussi comporter une telle réserve autonome d'énergie.

Le véhicule des Figures 4 et 5 comprend, selon un mode préférentiel, un guide élastique 22. Le guide élastique 22 a pour fonction de coopérer avec le deuxième chemin de guidage 4b, opposé au premier chemin de guidage 4a sur la voie de transport. La liaison créée entre le véhicule et la paroi de la voie 30, lorsque le guide 22 coopère avec l'épaulement 4b, est une liaison élastique.

Le guide 22 peut adopter une configuration haute, illustrée sur les Figures 4 et 5, dans laquelle le guide 22 est agencé pour venir en contact avec l'épaulement 4b. Le guide 22 peut en outre adopter une configuration basse (par exemple, rétractée dans le châssis) dans laquelle le guide 22 ne coopère pas avec l'épaulement 4b.

Lorsque le guide 22 est en contact avec l'épaulement 4b, le guide exerce un effort de réaction tendant à empêcher le véhicule de se déplacer brutalement vers la droite. Toutefois, le guide 22 présente une élasticité qui autorise un déplacement horizontal du guide jusqu'à une certaine limite, par exemple un déplacement d'un à dix millimètres.

Ici, le guide 22 est une pièce à ressort, présentant une rigidité plus faible que la tige 21 selon une direction horizontale.

On notera que les exemples alternatifs de véhicule de support de tube présentés ci-après, comportant des dispositifs de guidage différents de celui décrit ci-avant, peuvent également comporter un guide similaire au guide 22.

Dans ce mode préférentiel, la voie 30 comprend les deux épaulements 4a et 4b.

Dans une variante, le véhicule de support de tube ne comprend pas de guide 22. Le véhicule peut par exemple comprendre un deuxième dispositif de guidage sur le côté gauche, de structure et de fonctionnement similaire au dispositif de guidage 2.

De façon optionnelle, le véhicule peut aussi comprendre un capteur permettant de détecter la présence d'autres véhicules à proximité.

Un avantage du mode de réalisation des Figures 4 et 5 est que l'architecture du véhicule est très simple. Le véhicule est facile à assembler. En outre, si le corps du véhicule est moulé en matériau plastique, aucune soudure n'est nécessaire.

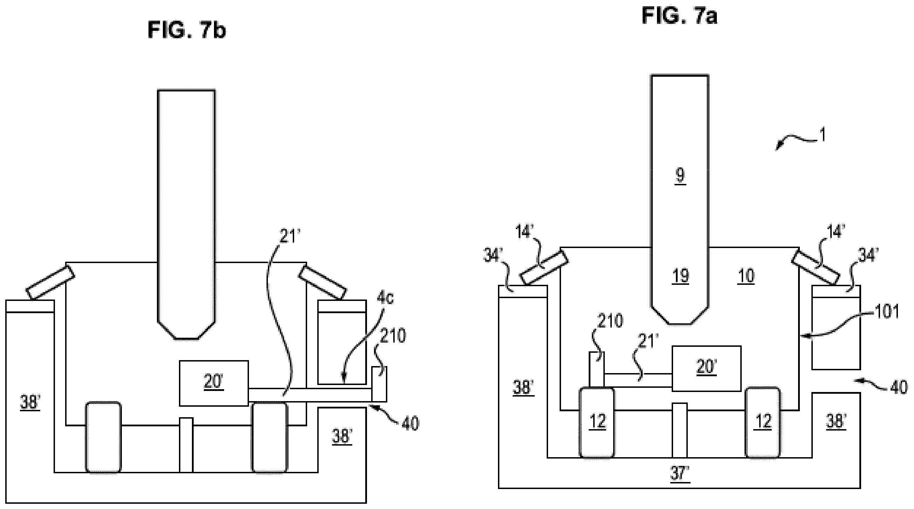

De façon optionnelle et avantageuse, une voie de transport d'un circuit de transport d'échantillons peut être configurée pour permettre un retrait manuel du véhicule en cas de panne de ce dernier. Les Figures 6a à 6c représentent plusieurs voies de transport comprenant des épaulements, similaires à la voie de transport de la Figure 5, avec des éléments mobiles pour permettre un retrait du véhicule. On notera que ces éléments mobiles peuvent également être mis en œuvre sur une voie de transport du type décrit ci-après en relation aux Figures 7a et 7b.

La Figure 6a illustre une voie de transport 30 selon une première variante permettant un retrait manuel de véhicule. Sur un tronçon longitudinal de la voie, les parties médiales 39 sont fixées à leurs murs latéraux 38 respectifs le long d'une tranche T1 située dans le prolongement des bords supérieurs des murs latéraux. De préférence, les parties médiales sont fixées sur les murs 38 uniquement le long de la tranche T1. Les parties médiales 39 et les parties terminales comprenant les épaulements sont mobiles en rotation autour de la tranche, entre une position 390(1) basse représentée en trait plein sur la Figure 6a et une position haute 390(2) représentée en trait pointillé sur la figure.

La position 390(1) est une position de maintien du véhicule. Il s'agit de la position normale en cours de fonctionnement du véhicule et du circuit, correspondant à la position illustrée sur la Figure 5. La position 390(2) est une position de libération du véhicule. Dans cette position, les parties terminales de la voie de transport (ici les épaulements 4a et 4b) sont configurées pour ne pas maintenir en position le véhicule lorsque ce dernier est situé entre les parties terminales. Un avantage est de permettre un déplacement vertical d'un véhicule (non représenté), par exemple selon la direction E1, pour retirer le véhicule.

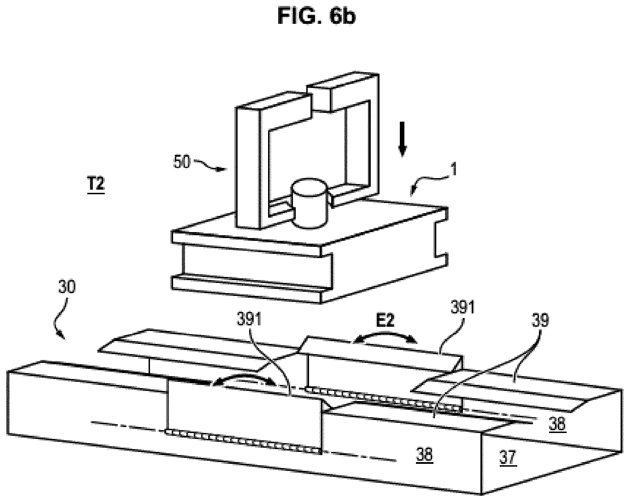

La Figure 6b illustre une deuxième variante de voie permettant un retrait de véhicule. Sur un tronçon longitudinal de la voie, des parties hautes de murs latéraux 38, ainsi que les parties médiales 39 et les parties terminales situées dans le prolongement transversal desdites parties hautes, sont mobiles autour d'une tranche T2 située dans le prolongement des bords supérieurs des murs latéraux. On définit ainsi des tronçons mobiles 391 des deux murs latéraux. Les tronçons 391 sont situés en vis-à-vis et peuvent être écartés par un geste d'un opérateur. La position écartée des tronçons 391 correspond à une position de libération du véhicule et la position non écartée correspond à une position de maintien du véhicule. On a également représenté sur la Figure 6b un bras robotisé 50 et un véhicule 1 extrait de la voie de transport 30, maintenu par les pinces du bras robotisé.

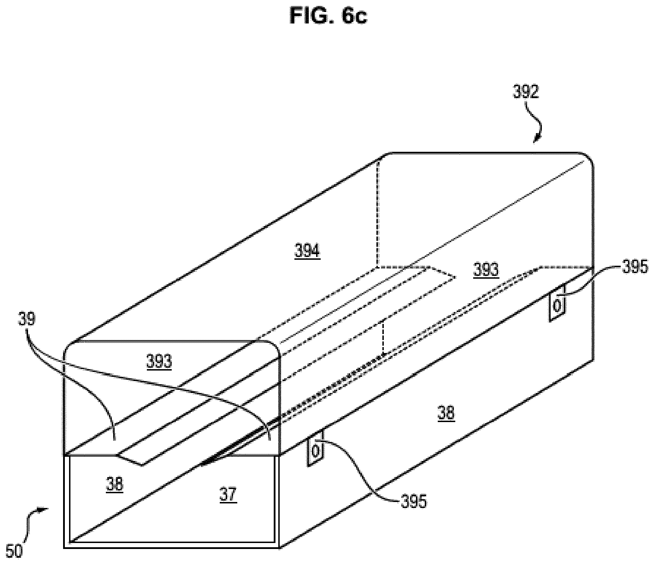

La Figure 6c illustre une troisième variante de voie permettant un retrait de véhicule. Ici, un couvercle 392 repose sur les murs latéraux 38 de la voie de transport 30. Les parties médiales 39 et les épaulements formant parties terminales desdites parties médiales, forment une surface inférieure du couvercle 392. Le couvercle comprend également des parois latérales 393 ainsi qu'une paroi supérieure 394 s'étendant entre les parois latérales. Le couvercle 392 peut être attaché aux murs latéraux de la voie de transport par tous moyens de fixation connus ; ici, des attaches à vis 395 sont disposées sur la longueur du couvercle.

On comprendra que si les attaches à vis 395 sont dévissées, le couvercle 392 peut être soulevé, ce qui laisse découvert l'espace situé entre les murs latéraux 38. Ainsi, si un véhicule se trouve dans ledit espace, le véhicule peut être retiré manuellement ou par le bras robotisé de la Figure 6b. Le couvercle 392 est ainsi amovible. La position où le couvercle est en place est une position de maintien du véhicule et la position où le couvercle est soulevé est une position de libération du véhicule.

De manière préférée, dans ces trois variantes, le basculement des parois de la voie de transport entre la position de maintien du véhicule et la position de libération du véhicule est effectué de façon manuelle, par un geste d'un opérateur. Le basculement peut également être effectué par un système mécanique robotisé, et/ou être commandé à distance par des actionneurs.

On notera que les éléments mobiles ou amovibles des variantes des Figures 6a à 6c autorisant le retrait du véhicule peuvent être utilisés en combinaison.

La Figure 7a représente un deuxième exemple de véhicule de support de tube conforme à la Figure 3. Ce véhicule comprend un dispositif de guidage mécanique comportant, tout comme le véhicule du premier exemple, une tige mobile entre une position escamotée et une position déployée pour coopérer sélectivement avec un bord d'un chemin de guidage. Le véhicule est également vu de l'arrière. On a représenté le véhicule au cours de son déplacement dans une voie de transport.

Le véhicule et la voie de transport selon ce deuxième exemple sont de structure globalement identique au véhicule et à la voie de transport du premier exemple, excepté en ce qui concerne le contact électrique entre le véhicule et la voie de transport, et en ce qui concerne la structure du chemin de guidage et sa coopération avec le dispositif de guidage du véhicule.

Dans ce deuxième exemple, la voie de transport présente une forme de berceau ouvert sur sa face haute. La section de la voie de transport, selon un plan perpendiculaire à la direction d'avancement du véhicule, présente une forme de U.

Les murs latéraux de la voie de transport ne comprennent pas nécessairement de parties médiales s'étendant parallèlement à la face basse de la voie de transport et à l'extrémité des murs latéraux. Ici, le berceau comprend une face basse 37' et deux murs latéraux 38' parallèles s'étendant des deux côtés de la face basse. Le véhicule est reçu entre les deux murs 38' pendant son déplacement sur la voie de transport.

En guise de chemin de guidage, le mur latéral droit comprend ici une cavité 40 traversant le mur. Cette cavité, située ici environ à mi-hauteur du mur, s'étend le long de la voie d'entrée, de la bifurcation et de la première voie de sortie de la voie de transport. La cavité 40 présente par exemple une forme de trou oblong s'étendant selon une direction longitudinale parallèle à la face basse de la voie de transport.

Dans l'exemple des Figures 7a et 7b, comme dans les autres exemples de réalisation de véhicule figurant dans la présente description, des dimensions possibles du véhicule sont les suivantes :
- hauteur totale comprise entre 50 et 100 millimètres, par exemple 70 millimètres,
- largeur du châssis comprise entre 30 et 100 millimètres, par exemple 60 millimètres,
- longueur du châssis comprise entre 30 et 100 millimètres, par exemple 70 millimètres.

Comme dans l'exemple de réalisation précédent, le véhicule comprend préférentiellement deux roues 12 motrices.

La face latérale 101 droite du véhicule fait face à la cavité 40. Le dispositif de guidage comprend une tige 21' dotée, en son extrémité terminale, d'une tête de tige 210 fixée à la tige. La tige est dimensionnée pour pouvoir traverser la cavité 40 en s'étendant sensiblement perpendiculairement à la surface du mur latéral droit. La tige est mobile entre une position escamotée représentée sur la Figure 7a, dans laquelle la tige et la tête de tige demeurent dans le châssis 10 du véhicule, et une position déployée représentée sur la Figure 7b, dans laquelle la tige traverse la cavité.

Dans cette dernière position, la tête de tige 210 est bloquée à gauche (selon l'orientation de la Figure 7b) par un bord 4c de la cavité 40, ce qui empêche le véhicule de se déplacer latéralement vers la gauche. En effet, la tête de tige présente une dimension verticale plus grande que la largeur de la cavité 40, et la tige dans la position déployée est agencée de sorte que la tête de tige est à une faible distance latérale de la surface droite du mur latéral droit de la voie de transport.

Ainsi, lorsque la tige est dans la position déployée de la Figure 7b, le véhicule dispose d'une faible marge d'éloignement latéral par rapport au mur latéral droit. Le véhicule est forcé d'emprunter la première voie de sortie lorsqu'il franchit la bifurcation.

Pour permettre le passage de la tige 21' entre les positions escamotée et déployée, on peut prévoir dans le mur latéral un élargissement localisé de la cavité 40, permettant à la tête de tige 210 de traverser le mur latéral.

Le dispositif de guidage est actionné par un électroaimant ou par un moteur pour commuter entre les positions escamotée et déployée de la tige. Dans cet exemple, le solénoïde 20' est contrôlé électroniquement pour commander un changement de position de la tige 21'. On peut aussi utiliser un servomoteur pour commander le déplacement de la tige et l'aiguillage du véhicule.

De manière avantageuse et optionnelle, des roues amortissantes (non illustrées sur les Figures 7a et 7b) peuvent être agencées entre les faces latérales du châssis du véhicule et les murs latéraux de la voie de transport, par exemple entre la face latérale droite 101 et le mur latéral 38' en regard. Plusieurs roues amortissantes sont par exemple disposées sur la face latérale droite 101, dont une roue sur la partie avant de ladite face et une roue sur la partie arrière de ladite face. Les roues amortissantes comprennent une bande de matière amortissante sur la périphérie de la roue.

Un avantage est que les frottements entre le véhicule et les parois de la voie de transport sont minimisés. L'usure du châssis du véhicule et de la voie de transport sont ainsi limitées, notamment au niveau des bifurcations lorsque le véhicule change de direction.

On notera qu'une ou plusieurs roues amortissantes peuvent aussi être ajoutées sur des véhicules correspondant aux autres exemples de réalisation de la présente description.

En alternative à la configuration représentée sur les Figures 7a et 7b, une voie de transport peut comporter à la fois une cavité semblable à la cavité 40 sur une paroi latérale gauche et une cavité sur une paroi latérale droite. Si la tige 21' est déplaçable entre une position de saillie à gauche, une position médiane et une position de saillie à droite, par exemple si la tige 21' est commandée par un servomoteur, alors il est possible de commander l'engagement de la tige avec la cavité de gauche ou avec la cavité de droite. Le véhicule peut alors être commandé pour s'engager sélectivement sur une voie parmi trois voies de sortie (voie de gauche, voie centrale, voie de droite) après avoir franchi une bifurcation.

Le véhicule selon l'exemple représenté sur les Figures 7a et 7b comprend, sur les flancs latéraux du châssis 10, des contacts glissants mobiles 14'. Ces contacts glissants sont posés, au cours du déplacement du véhicule le long de la voie de transport, sur des pistes d'alimentation électrique 24' qui courent le long des murs latéraux 38'.

Dans le présent exemple, les pistes d'alimentation électrique 34' sont situées aux extrémités hautes des deux murs latéraux 38'. Le pôle électrique positif du véhicule comprend les contacts glissants mobiles 14' et le pôle électrique négatif comprend le plan de roulage. Les contacts glissants mobiles 14' pendent depuis les flancs latéraux du véhicule, et sont posés par le haut sur les pistes 34'.

De façon préférée, les contacts glissants mobiles 14' sont formés en un matériau permettant de minimiser les frottements avec les pistes d'alimentation 34', afin de limiter l'usure desdits contacts.

L'avantage d'utiliser des contacts électriques posés par le haut sur la voie de transport est de ne pas empêcher un déplacement du véhicule vers le haut.

Ainsi, en cas de panne du véhicule, le véhicule peut être tiré vers le haut de façon manuelle ou automatisée pour libérer la voie de transport. On peut par exemple utiliser un bras robotisé comme celui illustré sur la Figure 6b pour extraire le véhicule.

En option, le berceau de guidage matérialisant la voie de transport peut être conducteur et constituer un pôle électrique. Par exemple, le berceau peut être électrisé pour former un pôle électrique négatif. Pour cela, l'intégralité du berceau peut être formée d'un matériau métallique. Un avantage de cette option est de permettre l'utilisation d'un unique élément conducteur dans la piste d'alimentation : pour alimenter le véhicule, un contact électrique du véhicule est directement mis en contact avec la voie de transport et un autre contact électrique du véhicule est mis en contact avec ledit élément conducteur.

On notera que l'option d'une voie de transport comportant des éléments conducteurs formant un pôle électrique peut également être mise en œuvre avec des contacts électriques glissants latéraux.

En alternative ou en combinaison des contacts glissants mobiles 14' coopérant avec les pistes 34', le véhicule peut comprendre des contacts glissants 14 similaires à ceux du véhicule illustré sur les Figures 4 et 5, coopérant avec des rails de glissement 34.

Le véhicule peut également comprendre un guide similaire au guide 22 des Figures 4 et 5, pour empêcher un déplacement brutal du véhicule lors de son changement de direction.

### Séquence de déplacement du véhicule à guidage mécanique

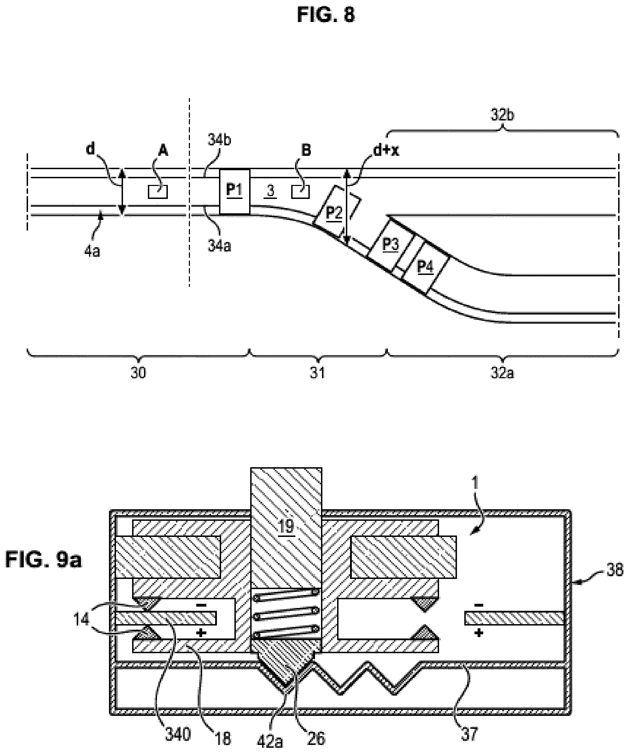

La Figure 8 est une vue de dessus d'une zone du circuit 3, sur laquelle on a relevé plusieurs positions successives P1 à P4 du véhicule selon le mode des Figures 4 et 5 au cours de son déplacement le long du circuit 3. On notera que le circuit 3 est aussi adapté pour être utilisé avec le véhicule du deuxième mode décrit en relation aux Figures 7a et 7b. On ne représente pas le reste du circuit 3, qui forme de préférence une boucle fermée.

La zone du circuit 3 illustrée en Figure 8 comprend la voie d'entrée 30 débouchant en son extrémité droite sur la bifurcation 31, la bifurcation débouchant elle-même en ses extrémités droites sur une première voie de sortie 32a et une deuxième voie de sortie 32b.

La bifurcation permet au véhicule circulant sur la voie d'entrée d'être redirigé sur la première voie de sortie ou sur la deuxième voie de sortie.

Sur la Figure 8, on a représenté une séquence de déplacement du véhicule au cours de laquelle le véhicule emprunte la bifurcation 31, puis est dirigé vers la première voie de sortie 32a par l'action du dispositif de guidage 2.

L'épaulement 4a forme un chemin de guidage qui longe la voie 30, la partie basse de la bifurcation 31 et la première voie de sortie 32a. L'épaulement 4b longe la voie 30, la partie haute de la bifurcation 31 et la deuxième voie de sortie 32b. Les épaulements 4a et 4b sont solidaires de leurs voies de transport respectives.

On a également représenté une première piste d'alimentation électrique 34a (conforme à la description ci-avant) qui s'étend en vis-à-vis de l'épaulement 4a et une deuxième piste d'alimentation électrique 34b qui s'étend en vis-à-vis de l'épaulement 4b.

De préférence, les voies de transport 30, 32a et 32b sont de largeur identique d (sauf au niveau de la bifurcation) de sorte que le véhicule est adapté pour circuler sur les trois voies sans risquer de pivoter.

La séquence de déplacement représentée sur la Figure 8 est comme suit :
- Avant d'atteindre la position P1, le véhicule circule sur la voie 30, la tige 21 est en position escamotée et ne coopère pas avec l'épaulement 4a, le guide 22 est en contact avec l'épaulement 4b.
- A la position P1, le véhicule circule toujours sur la voie 30 et la tige 21 est basculée en position déployée. Le véhicule est donc solidarisé avec l'épaulement 4a.

De façon préférée, le basculement de la tige 21 en position déployée résulte de la réception par l'unité de traitement 13 d'un signal directionnel.
- A la position P2, le véhicule circule sur la bifurcation 31. La tige 21 demeure en position déployée. Le guide 22, qui a coopéré avec l'épaulement 4b entre les positions P1 et P2 en permettant un décrochage sur une distance x du véhicule vers le bas, est désormais abaissé. Le véhicule devient alors libre de pivoter pour réaliser son changement de direction.
- A la position P3, le véhicule entame sa course sur la voie de sortie 32a. Le guide 22, qui était abaissé, est basculé en position haute, de sortie que le véhicule est à nouveau guidé par la coopération du guide 22 avec un autre épaulement qui fait face à l'épaulement 4a sur la voie de sortie 32a. La tige 21 est toujours en position déployée.
- A la position P4, le véhicule poursuit sa course sur la voie de sortie 32a et la tige 21 est basculée en position escamotée. Le dispositif de guidage 2 et le guide 22 sont donc dans des configurations similaires par rapport à l'état de départ avant la position P1.

Ainsi, le dispositif de guidage 2 permet de forcer le véhicule à réaliser le changement de direction et le guide élastique 22 permet d'accompagner le changement de direction.

Typiquement, la première voie de sortie 32a se situe à proximité d'un automate de diagnostic tel que l'un quelconque des instruments 5a à 5d. La première voie de sortie 2a correspond alors à une bretelle de simulation pour diriger le véhicule de transport de tube vers l'automate de diagnostic.

Grâce à son dispositif de guidage intégré, le véhicule franchissant la bifurcation peut soit emprunter la première voie 32a pour que l'échantillon biologique contenu dans le tube fasse l'objet d'une analyse, soit emprunter la deuxième voie 32b pour traverser sans analyse. Un avantage est que l'arrivée de tubes vides, ou de tubes n'étant pas destinés à une analyse par l'automate de diagnostic situé dans la zone, ne ralentit pas la cadence de l'automate de diagnostic.

Ainsi, une optimisation des cadences d'analyse des instruments est possible, même lorsque différents types de tests sont réalisés, le cas échéant sur un même échantillon biologique. Il est courant de pratiquer, après un premier test, des tests supplémentaires de type « Rerun » selon la terminologie courante (une nouvelle itération du test initial, pour préciser ou vérifier un résultat de mesure en cas de suspicion d'erreur) ou de type « Reflex » (des tests secondaires pratiqués seulement sur un sous-ensemble de tubes).

De manière très avantageuse, les voies de transport du circuit 3 comprennent au moins un détecteur de véhicule, configuré pour détecter de manière rapide le passage d'un véhicule. Ledit détecteur est de préférence également configuré pour identifier le véhicule ou est associé à un autre détecteur propre à assurer cette identification. Les détecteurs sont typiquement placés sous la surface supérieure d'une voie de transport. Selon un exemple, les détecteurs de véhicule sont des émetteurs/récepteurs radiofréquence configurés pour communiquer avec une puce radiofréquence du véhicule, telle qu'une puce RFID.

Dans cet exemple, la voie d'entrée 30 comprend un premier capteur A permettant une détection du véhicule avant la transmission d'un signal directionnel au véhicule. La bifurcation 31 comprend un deuxième capteur B permettant de détecter si la zone immédiatement en amont de la jonction entre les deux voies de sortie 32a et 32b est libre, ou si ladite zone est occupée par un véhicule. Un avantage est d'éviter des collisions entre véhicules de support de tube.

Les capteurs A et B sont de préférence des détecteurs de passage par coupure de faisceau optique. Les capteurs peuvent ainsi détecter avec une grande réactivité un passage du véhicule à travers leur zone de détection. Le circuit peut comprendre d'autres détecteurs de passage par coupure de faisceau optique.

### Véhicule à dispositif de guidage mécanique sur une face basse

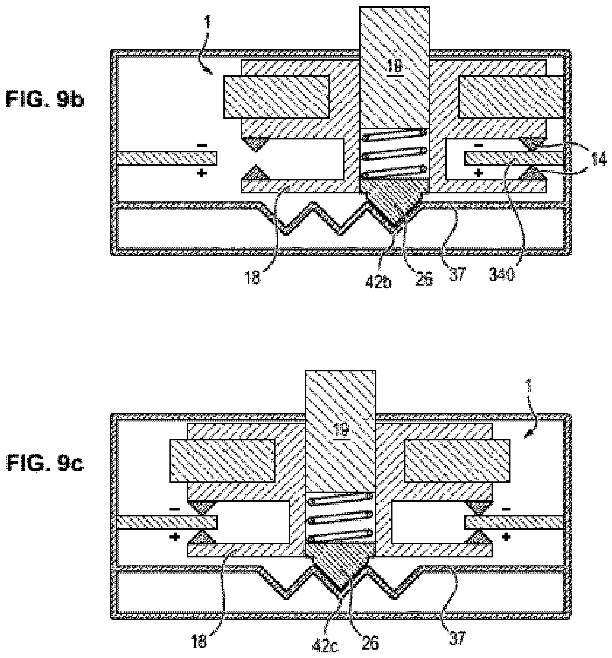

On a représenté en Figures 9a, 9b et 9c trois configurations distinctes d'un véhicule de support de tube conforme au schéma de la Figure 3, selon un troisième exemple de réalisation, pouvant circuler sur la voie de transport 30. Ce véhicule est adapté pour fonctionner avec un circuit présentant une bifurcation menant vers trois voies de sortie distinctes. Sur les Figures 9a à 9c, le véhicule 1 est vu depuis l'arrière, le véhicule étant situé sur la bifurcation et s'engageant vers l'une des voies de sortie.

Dans ce troisième exemple de réalisation, le dispositif de guidage comprend un élément de butée basse 26 pouvant faire saillie d'une face basse 18 du châssis du véhicule. L'élément de butée basse 26 présente une forme complémentaire à la forme d'une rainure de la voie de transport. La rainure est creusée dans la surface 37 de la voie de transport sur laquelle le véhicule est situé. Ici, l'élément de butée 26 a une forme sensiblement triangulaire et la rainure a également une forme triangulaire. La rainure de la voie de transport forme un chemin de guidage propre à bloquer latéralement l'élément de butée, forçant le véhicule à rester à proximité de la rainure. Le véhicule est forcé à s'orienter vers la voie de sortie le long de laquelle court la rainure, lorsque celui-ci franchit la bifurcation.

L'élément de butée basse 26 constitue donc un index qui peut être commuté par crantage (notamment sous le contrôle de l'unité de traitement, qui n'est pas représentée) pour être positionné sélectivement sur l'un des trois chemins de guidage correspondant aux trois voies de sortie. L'élément de butée basse 26 est fixé à un moyen de rappel commandable pour rétracter l'élément de butée, tel qu'un ressort.

La Figure 9a illustre une première configuration correspondant à un engagement de l'élément de butée basse 26 dans une rainure 42a qui court le long de la bifurcation 31 et de la première voie de sortie 32a du circuit. Le véhicule roule contre un mur latéral gauche de la voie de transport.

La Figure 9b illustre une deuxième configuration correspondant à un engagement de l'élément de butée basse 26 dans une rainure 42b qui court le long de la bifurcation 31 et de la deuxième voie de sortie 32b du circuit. Le véhicule roule contre un mur latéral droit de la voie de transport.

La Figure 9c illustre une troisième configuration correspondant à un engagement de l'élément de butée basse 26 dans une rainure 42c qui court le long de la bifurcation 31 et de la troisième voie de sortie 32c du circuit. Cette configuration correspond à une position centrale du véhicule 1, entre les deux positions des Figures 9a et 9b. On note que dans ce troisième exemple, la distance latérale entre les parois latérales du châssis du véhicule (lorsqu'il est dans la troisième configuration) et les murs latéraux est suffisante pour permettre un déplacement du véhicule vers la gauche ou vers la droite.

Dans le cas où l'alimentation du véhicule est réalisée via des pistes d'alimentation situées le long de la voie de transport, les contacts électriques 14 sont de préférence agencés de sorte qu'au moins une paire de contacts 14 est en contact avec une piste d'alimentation dans n'importe quelle configuration.

Ainsi, dans le présent exemple, le véhicule comprend une paire de contacts sur un côté gauche et une paire de contacts sur un côté droit, coopérant avec des électrodes 340 des pistes d'alimentation 34 à gauche et à droite respectivement. De plus, les pistes d'alimentation 34 s'étendent sur une largeur suffisante pour que les paires de contacts électriques 14 gauche et droite touchent les électrodes 340 avoisinantes lorsque le véhicule 1 est dans la position centrale illustrée sur la Figure 9c.

En alternative ou en combinaison, les pistes d'alimentation peuvent être placées sur les rainures pratiquées dans la surface 37. L'élément de butée basse 26 comprend alors des contacts électriques.

De façon encore alternative ou en combinaison, le véhicule 1 peut comprendre une réserve autonome d'énergie, de préférence un ou plusieurs accumulateur(s) ou supercondensateur(s). Un avantage est d'assurer qu'une alimentation électrique fiable demeure à disposition pour le véhicule 1 peu importe la configuration, et notamment lorsque le véhicule se situe dans la position centrale illustrée en Figure 9c.

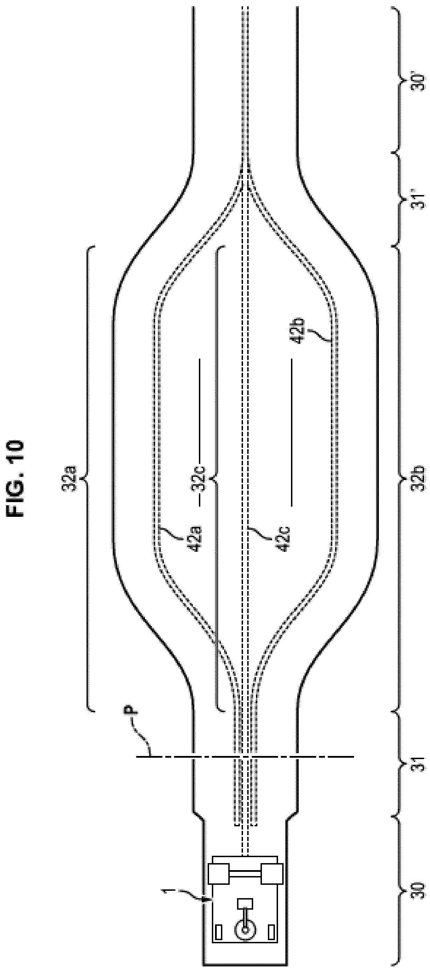

La Figure 10 illustre un véhicule 1 conforme à l'exemple des Figures 9a à 9c et un circuit de transport adapté pour fonctionner avec ledit véhicule. Le véhicule 1 roule ici sur une voie d'entrée 30, l'élément de butée basse 26 étant engagé dans une rainure 42c. La voie d'entrée débouche sur une bifurcation 31. On a représenté un plan P passant par la bifurcation 31, ce plan correspondant à la position du véhicule 1 sur les Figures 9a à 9c. La bifurcation débouche sur trois voies de sortie comprenant une voie centrale 32c et deux voies latérales 32a et 32b, respectivement gauche et droite. Les voies latérales constituent des déviations par rapport à la voie centrale.

On a représenté en outre une deuxième bifurcation 31', les voies de sortie 32a, 32b et 32c se rejoignant en leur extrémité droite sur la bifurcation 31'. La deuxième bifurcation 31' débouche en son extrémité droite sur une autre voie de transport 30'.

Une rainure est pratiquée le long de chacune des voies de sortie afin de diriger le véhicule dans son déplacement, peu importe la direction adoptée par le véhicule.

Dans cet exemple de circuit, un instrument d'analyse 5a, par exemple un automate de diagnostic, est positionné au voisinage de la voie de sortie gauche. Ainsi, lorsque le véhicule est dirigé vers la voie de sortie gauche, un tube transporté par le véhicule peut être soumis à une analyse par l'instrument d'analyse 5a. Le véhicule peut, à l'inverse, parcourir le chemin entre les bifurcations 31 et 31' en passant par la voie centrale, s'il n'est pas nécessaire pour le tube transporté d'être soumis à l'analyse par l'instrument 5a.

De même, un autre instrument d'analyse (non représenté ici) peut être disposé au voisinage de la voie de sortie droite.

### Véhicule à dispositif de guidage magnétique

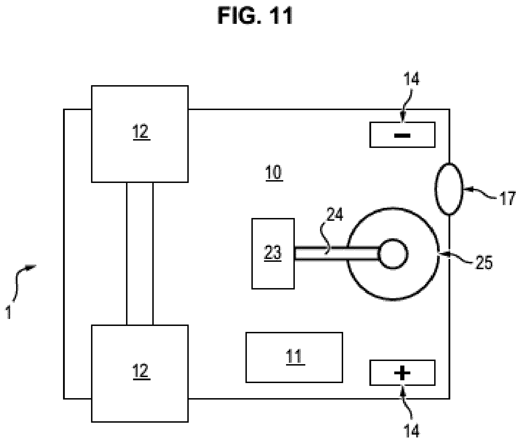

On a représenté en **Figure 11** un quatrième exemple de véhicule de support de tube conforme à la Figure 3. Le véhicule comprend ou ne comprend pas une puce radiofréquence. Le véhicule peut circuler sur la voie de transport 30.

Sur ce schéma, le véhicule est vu du dessous, du côté de la voie de transport.

Le véhicule comprend des éléments fonctionnels similaires à ceux du véhicule des Figures 4 et 5 pour la motorisation, la commande, la manutention du tube, l'alimentation électrique, etc. Pour plus de concision, on ne liste pas tous ces éléments ici.

Le dispositif de guidage ne fonctionne toutefois pas selon le principe explicité en relation aux Figures 4 et 5. Dans le présent exemple, le dispositif de guidage est magnétique.

Le dispositif de guidage comprend en effet ici un aimant 23 en matériau magnétique. L'aimant 23 est de préférence un aimant permanent, ou en alternative un électro-aimant. L'aimant 23 est mobile entre un premier emplacement, où il est destiné à coopérer avec un chemin magnétique de la voie de transport, et un deuxième emplacement, où il est destiné à ne pas coopérer de façon suffisante avec ledit chemin magnétique.

Les chemins magnétiques sont par exemple des bandes de matériau magnétique s'étendant le long des voies de transport, formant des chemins de guidage.

Typiquement, l'aimant 23 et le chemin magnétique de la voie de transport ont des polarités opposées, si bien que le chemin magnétique attire l'aimant 23 lorsque l'aimant 23 se trouve à une distance suffisamment faible du chemin magnétique.

De façon préférentielle, l'aimant 23 est mobile entre une position centrale (illustrée sur la Figure 11) correspondant au deuxième emplacement, et une position extrême (décalée vers le haut, ou vers le bas, par rapport à la position de la Figure 11) où l'aimant 23 rentre dans le champ d'action du chemin magnétique.

Dans la variante ici illustrée, deux chemins magnétiques des voies de transport sont placés sur les côtés des voies de transport, de telle sorte que l'aimant dans une position centrale ne soit pas attiré vers une position ou une autre, et que l'aimant puisse adopter deux positions extrêmes pour coopérer sélectivement avec un chemin magnétique pour réaliser un changement de direction du véhicule.

En alternative, l'aimant présente uniquement les deux positions extrêmes vers le haut et vers le bas et forme alors un système bistable.

Sur la Figure 11 et selon un agencement possible, l'aimant 23 est fixé à un bras 24 monté pivotant sur le châssis 10 du véhicule de support de tube. Le châssis comprend ici sur sa surface inférieure une pièce 25 de support de bras, solidaire du châssis. Une première extrémité du bras 24 est montée sur la pièce 25 et l'aimant 23 est fixé à une deuxième extrémité du bras. Le bras est commandé électroniquement, par exemple par l'unité de traitement du véhicule, pour se déplacer entre le premier emplacement et le deuxième emplacement de l'aimant 23 (et éventuellement d'autres emplacements) et ainsi réaliser les changements de direction au niveau des bifurcations.

Le véhicule comprend en outre, de façon préférentielle, un capteur 17 permettant de détecter la présence d'autres véhicules à proximité.

Le capteur 17 est ici un capteur optique configuré pour détecter un motif visuel, tel qu'un code à barres ou un QR Code, d'un autre véhicule (typiquement un véhicule de support de tube) situé à proximité. Toutefois, d'autres modes de détection peuvent être envisagés. En alternative ou en combinaison, le véhicule peut comporter un accéléromètre pour détecter des déplacements brusques du véhicule ou des collisions avec d'autres véhicules, ou tout autre moyen connu de détection d'obstacles.

On notera que le véhicule peut en outre comprendre un guide élastique similaire au guide 22 décrit ci-avant, formant liaison élastique avec un chemin de guidage de la voie de transport. Toutefois, la voie de transport doit alors comprendre un élément mécanique (tel qu'un épaulement de la Figure 5) apte à coopérer avec un tel guide élastique.

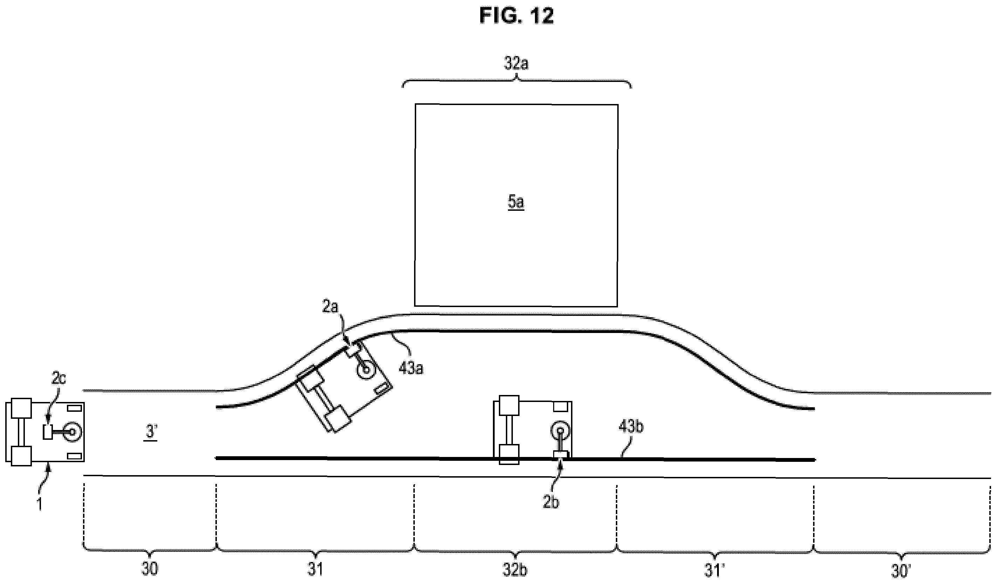

La **Figure 12** est une vue de dessus d'un circuit de transport 3' de même structure générale que le circuit de transport 3 de la Figure 8, excepté que le circuit ne comprend plus nécessairement des chemins de guidage mécaniques sous forme d'épaulements. Le circuit 3' comprend, comme chemins de guidage, des chemins magnétiques 43a et 43b.

Le chemin magnétique 43a longe la bifurcation 31 et la première voie de sortie 32a, cette dernière étant à proximité d'une position d'analyse d'un automate de diagnostic 5a.

Le chemin magnétique 43b longe la bifurcation 31 et la deuxième voie de sortie 32b. La deuxième voie de sortie 32b permet au véhicule de traverser sans passer par l'automate de diagnostic, donc sans ralentir l'analyse d'autres tubes.

On a représenté en outre une deuxième bifurcation 31', les voies de sortie 32a et 32b se rejoignant en leur extrémité droite sur la bifurcation 31'. La deuxième bifurcation 31' débouche en son extrémité droite sur une autre voie de transport 30'.

De même que pour l'exemple 1, les chemins de guidage sont solidaires de leurs voies de transport respectives.

Dans cet exemple, le dispositif de guidage comprenant l'aimant 23 peut coopérer avec le chemin magnétique 43a de sorte à diriger sélectivement le véhicule vers la voie de sortie 32a, et l'aimant peut aussi coopérer avec le chemin magnétique 43b de sorte à diriger sélectivement le véhicule vers la voie de sortie 32b.

L'aimant est ici commandé pour adopter sélectivement :
- une position centrale 2c dans laquelle il n'est sollicité par aucun des chemins magnétiques,
- une position extrême haute 2a dans laquelle il est sollicité par le chemin magnétique 43a,
- une position extrême basse 2b dans laquelle il est sollicité par le chemin magnétique 43b.

De manière préférentielle, l'aimant est mécaniquement sollicité vers la position centrale. Ainsi, en l'absence de sollicitation par un chemin magnétique, l'aimant adopte la position centrale. Lorsque le véhicule atteint la jonction de deux voies, l'aimant se repositionne préférentiellement dans la position centrale.

Les chemins magnétiques 43a et 43b sont suffisamment distants pour que l'aimant dans la position centrale 2c ne soit pas suffisamment attiré par l'un quelconque d'entre eux pour entraîner le véhicule de support de tube dans une direction ou une autre.

Ainsi, si le véhicule roulant sur la voie d'entrée 30 reçoit un signal de changement de direction avant de parvenir au niveau de la bifurcation 31, le dispositif de guidage adopte la position correspondante et le véhicule s'oriente pour emprunter l'une ou l'autre des voies de sortie 32a et 32b.

Dans le cas où le véhicule franchit la bifurcation 31 et poursuit sa course dans la première voie de sortie 32a, le véhicule est dirigé vers le système 5a. Par la suite, le véhicule est redirigé mécaniquement au niveau de la bifurcation 31' vers la voie 30'. Le dispositif de guidage n'intervient pas nécessairement pour diriger le véhicule vers la voie 30'.

Dans le cas où le véhicule franchit la bifurcation 31 et poursuit sa course dans la deuxième voie de sortie 32b, le véhicule avance tout droit, puis est redirigé mécaniquement au niveau de la bifurcation 31' vers la voie 30', sans être nécessairement dirigé par le dispositif de guidage.

Si le véhicule comprend un guide élastique, le guide élastique peut être commandé de manière similaire à la séquence de déplacement de la Figure 8 pour guider le mouvement.

Un avantage d'un véhicule comportant un dispositif de guidage magnétique, par exemple un dispositif conforme à l'exemple des Figures 11 et 12, est la possibilité d'éviter un contact direct entre le dispositif de guidage et le chemin de guidage, ce qui réduit l'usure de ces derniers. De plus, la structure des voies de transport est peu complexe puisqu'une simple bande métallique ferreuse peut servir de chemin de guidage et coopérer avec l'aimant du dispositif de guidage.

## Revendications

1. Véhicule (1) de transport d'un échantillon biologique, le véhicule étant mobile sur un circuit (3), le circuit comprenant :
- une voie d'entrée (30), une première voie de sortie (32a) et une deuxième voie de sortie (32b),
- une bifurcation (31) permettant au véhicule (1) circulant sur la voie d'entrée (30) d'être redirigé sur la première voie de sortie (32a) ou sur la deuxième voie de sortie (32b),
- un premier chemin de guidage (4a) longeant la voie d'entrée (30), la bifurcation (31) et la première voie de sortie (32a),
le véhicule étant **caractérisé en ce qu'**il comprend un dispositif de guidage (2) configurable dans :
- une première configuration (2a) dans laquelle le dispositif de guidage coopère avec le premier chemin de guidage (4a) de sorte à diriger le véhicule vers la première voie de sortie (32a) lorsque le véhicule franchit la bifurcation (31),
- une deuxième configuration (2b) dans laquelle le dispositif de guidage ne coopère pas avec le premier chemin de guidage (4a) lorsque le véhicule franchit la bifurcation (31), permettant au véhicule d'atteindre la deuxième voie de sortie (32b), et **en ce que** le dispositif de guidage comprend :
- une tige (21) et un solénoïde (20) adapté pour déplacer la tige (21), la tige (21) étant agencée pour venir en butée contre un bord du premier chemin de guidage lorsque le dispositif de guidage est dans la première configuration, de sorte à retenir le véhicule à proximité du premier chemin de guidage, ou
- un élément de butée basse (26), l'élément de butée basse étant déplaçable vers une position où il fait saillie de la face basse, l'élément de butée basse étant configuré pour s'engager dans une rainure (42a) du premier chemin de guidage (4a) lorsque le dispositif de guidage est dans la première configuration, de sorte à retenir le véhicule à proximité du premier chemin de guidage (4a), ou
- un aimant (23) mobile entre un premier emplacement où l'aimant (23) coopère avec le premier chemin de guidage (4a) de sorte à attirer le véhicule vers le premier chemin de guidage (4a), et un deuxième emplacement où l'aimant (23) ne coopère pas avec le chemin de guidage (43a) de façon suffisante pour attirer le véhicule vers le premier chemin de guidage (4a).

2. Véhicule selon la revendication 1, dans lequel le circuit comprend en outre un deuxième chemin de guidage (4b) qui longe la voie d'entrée (30), la bifurcation (31) et la deuxième voie de sortie (32a),
le dispositif de guidage dans la deuxième configuration coopérant avec le deuxième chemin de guidage (4b) de sorte à diriger le véhicule vers la deuxième voie de sortie (32b) lorsque le véhicule franchit la bifurcation (31).

3. Véhicule selon l'une quelconque des revendications 1 et 2, comprenant un châssis (10), dans lequel le dispositif de guidage comprend un bras (24) monté pivotant sur le châssis (10), l'aimant (23) étant fixé au bras.

4. Véhicule selon l'une des revendications 1 à 3, comprenant en outre des roues (12) et un moteur (11) configuré pour entraîner en rotation les roues (12) sélectivement vers l'avant ou vers l'arrière, le moteur étant un moteur à courant continu ou un moteur sans balais.

5. Véhicule selon l'une des revendications 1 à 4, comprenant en outre un guide apte à adopter une configuration dans laquelle le guide forme liaison élastique entre le véhicule et un deuxième chemin de guidage (4b) qui longe la voie d'entrée (30), la bifurcation (31) et la deuxième voie de sortie (32b), le guide étant de préférence un ressort (22).

6. Véhicule selon l'une des revendications 1 à 5, comprenant en outre une unité de commande (13) configurée pour commander un changement de configuration du dispositif de guidage depuis l'une des première et deuxième configurations vers l'autre configuration.

7. Véhicule selon l'une des revendications 1 à 6, comprenant :
- au moins un contact électrique glissant (14) adapté pour alimenter le véhicule en courant électrique, le contact électrique (14) étant agencé pour être en contact avec le circuit lorsque le véhicule circule sur le circuit, et/ou
- une réserve autonome d'énergie, de préférence un accumulateur ou un supercondensateur, et/ou
- un capteur de véhicule (17) configuré pour détecter un autre véhicule à proximité, et/ou
- une puce radiofréquence (16), de préférence une puce RFID, configurée pour émettre un signal comprenant un identifiant du véhicule.

8. Ensemble de transport d'échantillons comprenant :
- un véhicule (1) de transport d'échantillon selon les revendications 1 à 7,
- un circuit comprenant :
- une voie d'entrée (30),
- une première voie de sortie (32a) et une deuxième voie de sortie (32b),
- une bifurcation (31) formant intersection entre la voie d'entrée (30), la première voie de sortie (32a) et la deuxième voie de sortie (32b),
- un premier chemin de guidage (4a) longeant la voie d'entrée (30), la bifurcation (31) et la première voie de sortie (32a).

9. Ensemble selon la revendication 8, dans lequel le véhicule comprend des roues (12) et dans lequel la voie d'entrée et/ou la première voie de sortie comprend une surface basse (37) destinée à être en contact avec les roues (12) et comprend en outre deux murs latéraux (38) parallèles entre eux et s'étendant depuis la surface basse, le premier chemin de guidage (4a) étant agencé le long de l'un desdits murs latéraux, le premier chemin de guidage comprenant de préférence un épaulement ou un bord de cavité contre lequel le dispositif de guidage du véhicule est apte à venir en butée, dans lequel les murs latéraux comprennent chacun un épaulement, dans lequel les épaulements sont mobiles entre :
- une position de maintien du véhicule,
- une position de libération du véhicule, dans laquelle les épaulements sont configurés pour ne pas maintenir en position le véhicule lorsqu'il est situé entre les épaulements, de sorte à autoriser un retrait du véhicule du circuit.

10. Ensemble selon l'une des revendications 8 et 9, dans lequel le véhicule est conforme à la revendication 8, dans lequel le circuit comprend une piste d'alimentation (34) agencée pour coopérer avec le contact électrique (14) du véhicule.

11. Ensemble selon l'une des revendications 8 à 10, dans lequel :
- le circuit comprend au moins un détecteur de passage de véhicule, le détecteur de passage étant de préférence configuré pour recevoir un identifiant de véhicule, le détecteur de passage étant de préférence un émetteur/récepteur radiofréquence (35) configuré pour activer une puce radiofréquence (16) du véhicule, et/ou
- le circuit comprend la première voie de sortie, la deuxième voie de sortie et une troisième voie de sortie (32c), la troisième voie de sortie s'étendant entre la première voie de sortie et la deuxième voie de sortie, la bifurcation (31) formant intersection entre la voie d'entrée (30) et les première, deuxième et troisième voies de sortie.

12. Ensemble d'analyse d'échantillons comprenant :
- un ensemble de transport d'échantillons selon l'une des revendications 8 à 11, le véhicule comprenant un contenant (9) d'échantillon,
- une unité d'analyse d'échantillons (5a), agencée par rapport au circuit pour que le véhicule (1) ait accès, lorsqu'il circule sur le circuit, à une position dans laquelle le contenant (9) d'échantillon se situe dans une zone d'analyse (50) de l'unité d'analyse,
- une unité de contrôle (6) configurée pour émettre un signal de changement de direction destiné à une unité de commande du véhicule, dans lequel l'unité d'analyse d'échantillons (5a) est de préférence située à proximité du premier chemin de guidage (4a), de sorte que le véhicule (1), lors d'un franchissement de la bifurcation (31), soit dirigé vers l'unité d'analyse d'échantillons (5a) si le dispositif de guidage se trouve dans la première configuration (2a).

## Patentansprüche

1. Fahrzeug (1) zum Transport einer biologischen Probe, wobei das Fahrzeug auf einem Weg (3) verfahrbar ist und der Weg umfasst:
- eine Einfahrspur (30), eine erste Ausfahrspur (32a) und eine zweite Ausfahrspur (32b),
- eine Abzweigung (31), die es dem auf der Einfahrspur (30) fahrenden Fahrzeug (1) ermöglicht, auf die erste Ausfahrspur (32a) oder auf die zweite Ausfahrspur (32b) umgeleitet zu werden,
- eine erste Führungsbahn (4a), die entlang der Einfahrspur (30), der Abzweigung (31) und der ersten Ausfahrspur (32a) verläuft,
wobei das Fahrzeug **dadurch gekennzeichnet ist, dass** es eine Führungsvorrichtung (2) umfasst, die konfigurierbar ist in:
- eine erste Konfiguration (2a), in der die Führungsvorrichtung mit der ersten Führungsbahn (4a) zusammenwirkt, so dass das Fahrzeug auf die erste Ausfahrspur (32a) gelenkt wird, wenn das Fahrzeug die Abzweigung (31) passiert,
- eine zweite Konfiguration (2b), in der die Führungsvorrichtung nicht mit der ersten Führungsbahn (4a) zusammenwirkt, wenn das Fahrzeug die Abzweigung (31) passiert, wodurch das Fahrzeug die zweite Ausfahrspur (32b) erreichen kann, und wobei die Führungsvorrichtung umfasst:
- eine Stange (21) und ein Magnetventil (20), das dazu ausgelegt ist, die Stange (21) zu bewegen, wobei die Stange (21) so eingerichtet ist, dass sie an einer Kante der ersten Führungsbahn in Anlage kommt, wenn sich die Führungsvorrichtung in der ersten Konfiguration befindet, so dass das Fahrzeug in der Nähe der ersten Führungsbahn gehalten wird, oder
- ein unteres Anschlagelement (26), wobei das untere Anschlagelement in eine Position bewegbar ist, in der es aus der Unterseite herausragt, wobei das untere Anschlagelement so konfiguriert ist, dass es in eine Nut (42a) der ersten Führungsbahn (4a) eingreift, wenn sich die Führungsvorrichtung in der ersten Konfiguration befindet, so dass das Fahrzeug in der Nähe der ersten Führungsbahn (4a) gehalten wird, oder
- einen Magneten (23), der zwischen einer ersten Stelle bewegbar ist, in der der Magnet (23) mit der ersten Führungsbahn (4a) zusammenwirkt, so dass das Fahrzeug zu der ersten Führungsbahn (4a) angezogen wird, und einer zweiten Stelle, in der der Magnet (23) nicht ausreichend mit der Führungsbahn (43a) zusammenwirkt, um das Fahrzeug zu der ersten Führungsbahn (4a) anzuziehen.

2. Fahrzeug nach Anspruch 1, wobei der Weg ferner eine zweite Führungsbahn (4b) umfasst, die entlang der Einfahrspur (30), der Abzweigung (31) und der zweiten Ausfahrspur (32a) verläuft,
wobei die Führungsvorrichtung in der zweiten Konfiguration mit der zweiten Führungsbahn (4b) zusammenwirkt, so dass das Fahrzeug auf die zweite Ausfahrspur (32b) gelenkt wird, wenn das Fahrzeug die Abzweigung (31) passiert.

3. Fahrzeug nach einem der Ansprüche 1 und 2, das ein Fahrgestell (10) umfasst, wobei die Führungsvorrichtung einen schwenkbar am Fahrgestell (10) gelagerten Arm (24) umfasst, wobei der Magnet (23) am Arm befestigt ist.

4. Fahrzeug nach einem der Ansprüche 1 bis 3, das ferner Räder (12) und einen Motor (11) umfasst, der so konfiguriert ist, dass er die Räder (12) wahlweise vorwärts oder rückwärts rotatorisch antreibt, wobei der Motor ein Gleichstrommotor oder ein bürstenloser Motor ist.

5. Fahrzeug nach einem der Ansprüche 1 bis 4, das ferner eine Führung umfasst, die in der Lage ist, eine Konfiguration einzunehmen, in der die Führung eine elastische Verbindung zwischen dem Fahrzeug und einer zweiten Führungsbahn (4b) bildet, die entlang der Einfahrspur (30), der Abzweigung (31) und der zweiten Ausfahrspur (32b) verläuft, wobei die Führung vorzugsweise eine Feder (22) ist.

6. Fahrzeug nach einem der Ansprüche 1 bis 5, das ferner eine Steuereinheit (13) umfasst, die so konfiguriert ist, dass sie einen Konfigurationswechsel der Führungsvorrichtung von einer von der ersten und zweiten Konfiguration in die andere Konfiguration steuert.

7. Fahrzeug nach einem der Ansprüche 1 bis 6, umfassend:
- mindestens einen elektrischen Schleifkontakt (14) umfasst, der geeignet ist, das Fahrzeug mit elektrischem Strom zu versorgen, wobei der elektrische Kontakt (14) so eingerichtet ist, dass er mit dem Weg in Kontakt steht, wenn das Fahrzeug auf dem Weg fährt, und/oder
- eine autonome Energiereserve, vorzugsweise einen Akku oder einen Superkondensator, und/oder
- einen Fahrzeugsensor (17), der so konfiguriert ist, dass er ein anderes Fahrzeug in der Nähe erkennt, und/oder
- einen Hochfrequenzchip (16), vorzugsweise einen RFID-Chip, der so konfiguriert ist, dass er ein Signal sendet, das eine Fahrzeugkennung umfasst.

8. Anordnung zum Transport von Proben, umfassend:
- ein Probentransportfahrzeug (1) nach den Ansprüchen 1 bis 7,
- einen Weg, der umfasst:
- eine Einfahrspur (30),
- eine erste Ausfahrspur (32a) und eine zweite Ausfahrspur (32b),
- eine Abzweigung (31), die eine Kreuzung zwischen der Einfahrspur (30), der ersten Ausfahrspur (32a) und der zweiten Ausfahrspur (32b) bildet,
- eine erste Führungsbahn (4a), die entlang der Einfahrspur (30), der Abzweigung (31) und der ersten Ausfahrspur (32a) verläuft.

9. Anordnung nach Anspruch 8, wobei das Fahrzeug Räder (12) umfasst und wobei die Einfahrspur und/oder die erste Ausfahrspur eine Bodenfläche (37) aufweist, die dazu bestimmt ist, mit den Rädern (12) in Kontakt zu stehen, und ferner zwei zueinander parallele Seitenwände (38) umfasst, die sich ab der Bodenfläche erstrecken, wobei die erste Führungsbahn (4a) entlang einer der Seitenwände eingerichtet ist, wobei die erste Führungsbahn vorzugsweise eine Schulter oder eine Muldenkante umfasst, an der die Führungsvorrichtung des Fahrzeugs in Anlage kommen kann, wobei die Seitenwände jeweils eine Schulter aufweisen, wobei die Schultern beweglich sind zwischen:
- einer Halteposition des Fahrzeugs,
- einer Freigabeposition des Fahrzeugs, in der die Schultern so konfiguriert sind, dass sie das Fahrzeug nicht in Position halten, wenn es sich zwischen den Schultern befindet, um ein Entfernen des Fahrzeugs von dem Weg zu gestatten.

10. Anordnung nach einem der Ansprüche 8 und 9, wobei das Fahrzeug Anspruch 8 entspricht, wobei der Weg einen Versorgungspfad (34) umfasst, der so eingerichtet ist, dass er mit dem elektrischen Kontakt (14) des Fahrzeugs zusammenwirkt.

11. Anordnung nach einem der Ansprüche 8 bis 10, wobei:
- der Weg mindestens einen Fahrzeugpassiersensor umfasst, wobei der Passiersensor vorzugsweise so konfiguriert ist, dass er eine Fahrzeugkennung empfängt, wobei der Passiersensor vorzugsweise ein Hochfrequenz-Sender/Empfänger (35) ist, der so konfiguriert ist, dass er einen HochfrequenzChip (16) des Fahrzeugs aktiviert, und/oder
- der Weg die erste Ausfahrspur, die zweite Ausfahrspur und eine dritte Ausfahrspur (32c) umfasst, wobei sich die dritte Ausfahrspur zwischen der ersten Ausfahrspur und der zweiten Ausfahrspur erstreckt, wobei die Abzweigung (31) eine Kreuzung zwischen der Einfahrspur (30) und der ersten, zweiten und dritten Ausfahrspur bildet.

12. Anordnung zur Analyse von Proben, umfassend:
- eine Anordnung zum Transport von Proben nach einem der Ansprüche 8 bis 11, wobei das Fahrzeug einen Probenbehälter (9) umfasst,
- eine Probenanalyseeinheit (5a), die in Bezug auf den Weg so eingerichtet ist, dass das Fahrzeug (1) beim Befahren des Weges Zugang zu einer Position hat, in der sich der Probenbehälter (9) in einem Analysebereich (50) der Analyseeinheit befindet,
- eine Controllereinheit (6), die so konfiguriert ist, dass sie ein Richtungsänderungssignal an eine Steuereinheit des Fahrzeugs sendet, wobei sich die Probenanalyseeinheit (5a) vorzugsweise in der Nähe der ersten Führungsbahn (4a) befindet, so dass das Fahrzeug (1) bei einem Passieren der Abzweigung (31) zu der Probenanalyseeinheit (5a) geleitet wird, wenn sich die Führungsvorrichtung in der ersten Konfiguration (2a) befindet.

## Claims

1. A vehicle (1) for transporting a biological sample, the vehicle being movable on a circuit (3), the circuit comprising:
- an entry pathway (30), a first exit pathway (32a) and a second exit pathway (32b),
- a fork (31) allowing the vehicle (1) circulating on the entry pathway (30) to be redirected to the first exit pathway (32a) or to the second exit pathway (32b),
- a first guide path (4a) extending alongside the entry pathway (30), the fork (31) and the first exit pathway (32a),
the vehicle being **characterized in that** it comprises a guide device (2) configurable in:
- a first configuration (2a) in which the guide device cooperates with the first guide path (4a) so as to direct the vehicle towards the first exit pathway (32a) when the vehicle crosses the fork (31),
- a second configuration (2b) in which the guide device does not cooperate with the first guide path (4a) when the vehicle crosses the fork (31), thereby allowing the vehicle to reach the second exit pathway (32b), and **in that** guide device comprises:
- a rod (21) and a solenoid (20) adapted to move the rod (21), the rod (21) being arranged to abut against an edge of the first guide path when the guide device is in the first configuration, so as to retain the vehicle in a vicinity of the first guide path, or
- a low abutment element (26), the low abutment element being movable towards a position where it protrudes from the lower face, the low abutment element being configured to be engaged in a groove (42a) of the first guide path (4a) when the guide device is in the first configuration, so as to retain the vehicle in the vicinity of the first guide path (4a), or
- a movable magnet (23) between:
- a first position where the magnet (23) cooperates with the first guide path (4a) so as to attract the vehicle towards the first guide path (4a),
- a second position where the magnet (23) does not cooperate with the guide path (43a) sufficiently to attract the vehicle towards the first guide path (4a).

2. The vehicle according to claim 1, wherein the circuit further comprises a second guide path (4b) extending alongside the entry pathway (30), the fork (31) and the second exit pathway (32a),
the guide device in the second configuration cooperating with the second guide path (4b) so as to direct the vehicle towards the second exit pathway (32b) when the vehicle crosses the fork (31).

3. The vehicle according to any of claims 1 and 2, comprising a frame (10), wherein the guide device comprises an arm (24) pivotally mounted on the frame (10), the magnet (23) being fixed to the arm.

4. The vehicle according to any of claims 1 to 3, further comprising wheels (12) and a motor (11) configured to drive in rotation the wheels (12) selectively forward or backward, the motor being a DC motor or a brushless motor.

5. The vehicle according to any of claims 1 to 4, further comprising a guide able to adopt a configuration in which the guide forms an elastic connection between the vehicle and a second guide path (4b) which extends alongside the entry pathway (30), the fork (31) and the second exit pathway (32b), the guide preferably being a spring (22).

6. The vehicle according to any of claims 1 to 5, further comprising a control unit (13) configured to control a change in the configuration of the guide device from one of the first and second configurations towards the other configuration.

7. The vehicle according to any of claims 1 to 6, comprising:
- at least one sliding electrical contact (14) adapted to supply the vehicle with electric current, the electrical contact (14) being arranged to be in contact with the circuit when the vehicle is circulating on the circuit, and/or.
- an autonomous energy reserve, preferably an accumulator or a supercapacitor, and/or.
- a vehicle sensor (17) configured to detect another vehicle in a vicinity, and/or
- a radiofrequency chip (16), preferably an RFID chip, configured to emit a signal comprising an identifier of the vehicle.

8. A sample transport assembly comprising:
- a sample transport vehicle (1) according to claims 1 to 7,
- a circuit comprising:
- an entry pathway (30),
- a first exit pathway (32a) and a second exit pathway (32b),
- a fork (31) forming an intersection between the entry pathway (30), the first exit pathway (32a) and the second exit pathway (32b),
- a first guide path (4a) extending alongside the entry pathway (30), the fork (31) and the first exit pathway (32a).

9. The assembly according to claim 8, wherein the vehicle comprises wheels (12) and wherein the entry pathway and/or the first exit pathway comprises a lower surface (37) intended to be in contact with the wheels (12) and further comprises two side walls (38) parallel to each other and extending from the lower surface, the first guide path (4a) being arranged along one of said side walls, the first guide path preferably comprising a shoulder or a cavity edge against which the vehicle guide device is able to come into abutment, wherein the side walls each comprise a shoulder, wherein the shoulders are movable between:
- a vehicle holding position,
- a vehicle release position, in which the shoulders are configured so as not to hold the vehicle in position when it is located between the shoulders, so as to authorize a withdrawal of the vehicle from the circuit.

10. The assembly according to any of claims 8 to 9, wherein the vehicle is in accordance with claim 8, wherein the circuit comprises a supply track (34) arranged to cooperate with the electrical contact (14) of the vehicle.

11. The assembly according to any of claims 8 to 10, wherein:
- the circuit comprises at least one vehicle passage detector, the passage detector being preferably configured to receive a vehicle identifier, the passage detector being preferably a radiofrequency transceiver (35) configured to activate a radiofrequency chip (16) of the vehicle, and/or
- the circuit comprises the first exit pathway, the second exit pathway and a third exit pathway (32c), the third exit pathway extending between the first exit pathway and the second exit pathway, the fork (31) forming an intersection between the entry pathway (30) and the first, second and third exit pathways.

12. A sample analysis assembly comprising:
- a sample transport assembly according to any of claims 8 to 11, the vehicle comprising a sample container (9),
- a sample analysis unit (5a), arranged relative to the circuit so that the vehicle (1) has access, when it is circulating on the circuit, to a position in which the sample container (9) is located in an analysis area (50) of the analysis unit,
- a monitoring unit (6) configured to emit a direction change signal intended for a control unit of the vehicle, wherein the sample analysis unit (5a) is preferably located in a vicinity of the first guide path (4a), so that the vehicle (1), when crossing the fork (31), is directed towards the sample analysis unit (5a) if the guide device is in the first configuration (2a).
